# EUROPEAN PATENT APPLICATION

(11) **EP 4 694 043 A1**
(43) Date of publication of application: **11.02.2026**
(21) Application number: 24785025.8
(22) Date of filing: 06.02.2024
(51) Int. Cl.: H04L 12/28, H04L 12/12

(54) **HOME APPLIANCE AND SYSTEM FOR REMOTELY CONTROLLING SAME**

(30) Priority: 06.04.2023 KR 20230045703
(71) Applicant: LG Electronics Inc., Yeongdeungpo-gu Seoul 07336 (KR)
(72) Inventor: LEE, Sang Soo, Seoul 08592 (KR); CHOI, Yong Jin, Seoul 08592 (KR); KIM, Il Hwan, Seoul 08592 (KR)
(74) Representative: Ter Meer Steinmeister & Partner
(86) International application number: PCT/KR2024/001760
(87) International publication number: WO 2024/210314

(57) **Abstract**

The present invention relates to a home appliance and a system for remotely controlling the home appliance. To this end, the home appliance according to the present invention can be set to one of non-use of remote control, a one-time remote control mode, or a constant remote control mode. Accordingly, the present invention can provide a user with the convenience of being able to remotely control a home appliance according to various control methods.

## Description

### TECHNICAL FIELD

The present disclosure relates to a home appliance and a system for remotely controlling the home appliance.

### BACKGROUND ART

In general, a plurality of home appliances may exist in the home. For example, in the home, various home appliances that provide convenience in life, such as a refrigerator, a washing machine, an air purifier, an induction heater, a dishwasher, and a robot cleaner, may exist.

These home appliances operate based on their own software, and may perform different functions depending on types or models of the home appliances. The home appliance provides convenience to the user by performing an operation in response to the user's request and notifying the user of the operation.

However, the conventional home appliance turns off the power when a predetermined time duration has elapsed after a currently performed function is temporarily stopped. Thus, the home appliance does not re-operate the stopped function even in a situation in which the home appliance may re-operate the stopped function. Thus, the user has to move to the home appliance to re-operate the home appliance, and has re-operate the home appliance, thereby increasing an inconvenience of the user.

Therefore, there is a need for a technology of remotely controlling the home appliance in which the remote-control scheme is performed in various modes: a remote-control unavailable mode, a remote-control one-time-available mode, and a remote-control always-available mode, thereby allowing the user to conveniently remotely control the home appliance via a portable terminal.

### SUMMARY OF DISCLOSURE

### TECHNICAL PURPOSE

Accordingly, a purpose of the present disclosure is to provide a home appliance that is remotely controlled.

In addition, a purpose of the present disclosure is to provide a home appliance having a plurality of manipulation panels that are activated and/or deactivated in response to opening/closing of a door.

In addition, a purpose of the present disclosure is to provide a home appliance configured to set a remote-control mode to a remote-control unavailable mode, a remote-control one-time-available mode, or a remote-control always-available mode based on an input through a manipulation panel.

In addition, a purpose of the present disclosure is to provide a home appliance configured to set the remote-control mode to a remote-control unavailable mode, a remote-control one-time-available mode, or a remote-control always-available mode based on a control signal through a portable terminal.

In addition, a purpose of the present disclosure provides a system in which a server receives a control signal received from a portable terminal and provides the control signal to a home appliance corresponding to the control signal to remotely control the home appliance so that the home appliance meets a user's request.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

In order to achieve the above purposes, when an input for remotely controlling a home appliance according to the present disclosure is detected through a manipulation panel, the home appliance may be set to one of remote-control unavailable mode, a remote-control one-time-available mode and a remote-control always-available mode of the home appliance.

In addition, when an event is detected in a state in which the set remote-control mode is the remote-control one-time-available mode, the home appliance according to the present disclosure may deactivate the set remote-control one-time-available mode.

In addition, when an event is detected in a state in which the set remote-control mode is the remote-control always-available mode, the home appliance according to the present disclosure may maintain the set remote-control always-available mode.

In addition, the home appliance according to the present disclosure may deactivate the set remote-control one-time-available mode, in response to that switching of the remote-control one-time-available mode to a remote-control unavailable mode or the remote-control always-available mode, sensing of opening of a door of the home appliance, sensing of a key input through the manipulation panel, completion of a cycle of the home appliance, occurrence of an error in the home appliance, and/or an input related to power turning-on/off of the home appliance is detected.

In addition, the home appliance according to the present disclosure may deactivate the remote-control always-available mode in response to that switching of the remote-control always-available mode to the remote-control unavailable mode or the remote-control one-time-available mode, and/or detection of an error of the home appliance is detected.

In addition, the home appliance according to the present disclosure may maintain the remote-control always-available mode in response to that sensing of opening of a door of the home appliance, sensing of a key input through a manipulation panel, completion of a cycle of the home appliance, and/or an input related to powering-on/off of the home appliance is sensed.

In addition, the home appliance according to the present disclosure may be configured to control a light-emitting element to display information on the active state and the inactive state of the remote-control mode of the home appliance in different manners.

In addition, the home appliance according to the present disclosure may be configured to control the light-emitting element to display information on the remote-control unavailable mode, the remote-control one-time-available mode, and the remote-control always-available mode of the home appliance in different manners.

In addition, the home appliance according to the present disclosure may transmit information on remote-control of the home appliance to the server through a communicator.

In addition, in response to that a control signal for remotely controlling the home appliance according to the present disclosure is received, the home appliance may be set to one of a remote-control unavailable mode, a remote-control one-time-available mode, and a remote-control always-available mode.

In addition, the home appliance according to the present disclosure may include a dishwasher, a refrigerator, an air purifier, a clothing care apparatus, an induction heater, a washing machine, an oven, or a robot cleaner.

### TECHNICAL EFFECT

In the home appliance according to the present disclosure, when an input for remotely controlling is detected through the manipulation panel, a remote-control mode of the home appliance is set to one of a remote-control unavailable mode, a remote-control one-time-available mode, and a remote-control always-available mode, so that a user may remotely control the home appliance according to various control schemes.

In addition, when an event is detected in a state in which the remote-control mode is the remote-control one-time-available mode, the home appliance according to the present disclosure may deactivate the set remote-control one-time-available mode, thereby providing different control schemes of the home appliance to different users.

In addition, when an event is detected in a state in which the remote-control mode is the remote-control always-available mode, the home appliance according to the present disclosure may maintain the set remote-control always-available mode, thereby providing a remote-control mode on the same function to family members in the home.

In addition, the home appliance according to the present disclosure may deactivate the set remote-control one-time-available mode, in response to that switching of the remote-control one-time-available mode to a remote-control unavailable mode or the remote-control always-available mode, sensing of opening of a door of the home appliance, sensing of a key input through the manipulation panel, completion of a cycle of the home appliance, occurrence of an error in the home appliance, and/or an input related to power turning-on/off of the home appliance is detected. Thus, the home appliance according to the present disclosure may provide a temporary remote-control mode according to various events that may occur in the home appliance.

In addition, the home appliance according to the present disclosure may deactivate the remote-control always-available mode in response to that switching of the remote-control always-available mode to the remote-control unavailable mode or the remote-control one-time-available mode, and/or detection of an error of the home appliance is detected. Thus, the home appliance according to the present disclosure provide a temporary remote-control mode according to various events that may occur in the home appliance.

In addition, the home appliance according to the present disclosure may maintain the remote-control always-available mode in response to that sensing of opening of a door of the home appliance, sensing of a key input through a manipulation panel, completion of a cycle of the home appliance, and/or an input related to powering-on/off of the home appliance is sensed. Thus, the home appliance according to the present disclosure may maintain the remote-control mode even when an event occurs.

In addition, the home appliance according to the present disclosure may be configured to control a light-emitting element to display information on the active state and the inactive state of the remote-control mode of the home appliance in different manners, so that the user may intuitively determine whether the remote-control mode of the home appliance is in the active state or the inactive state.

In addition, the home appliance according to the present disclosure may be configured to control the light-emitting element to display information on the remote-control unavailable mode, the remote-control one-time-available mode, and the remote-control always-available mode of the home appliance in different manners, so that the user may intuitively determine the current remote-control mode of the home appliance.

In addition, the home appliance according to the present disclosure transmits information on remote-control of the home appliance to the server through the communicator, and the server transmits the information to the portable terminal, so that the user may remotely control the home appliance while being positioned at a long distance therefrom.

In addition, in response to that a control signal for remotely controlling the home appliance according to the present disclosure is received, the home appliance may be set to one of a remote-control unavailable mode, a remote-control one-time-available mode, and a remote-control always-available mode, so that the user may remotely control the home appliance while being positioned at a long distance therefrom.

In addition, the home appliance according to the present disclosure may operate in one of a remote-control unavailable mode, a remote-control one-time-available mode, and a remote-control always-available mode through an application installed in the portable terminal, so that the user may conveniently control the home appliance remotely.

In addition, the home appliance according to the present disclosure provides various remote-control modes according to the number and conditions of maintaining the remote-control mode, and provides different remote-control deactivation conditions related to different remote-control modes. Thus, the remote-control mode may be deactivated if necessary, thereby improving safety and reliability. Further, the remote-control mode may be prevented from being unnecessarily deactivated according to situations, thereby improving the convenience of use.

In addition to the above-described effects, the specific effects of the present disclosure will be described together while describing specific matters for implementing the present disclosure.

### BRIEF DESCRIPTION OF DRAWINGS

FIG. 1 is an example diagram illustrating a home appliance system in a home according to an embodiment of the disclosure.
FIG. 2 is a flowchart illustrating an operation process of a system for remotely controlling a home appliance according to an embodiment of the disclosure.
FIG. 3 is an example diagram illustrating a state in which a door of a dishwasher is closed according to an embodiment of the disclosure.
FIG. 4 is an example diagram illustrating a state in which a door of a dishwasher is opened according to an embodiment of the disclosure.
FIG. 5 is a schematic cross-sectional view of a dishwasher according to an embodiment of the disclosure.
FIG. 6 is an example diagram illustrating a manipulation panel of a home appliance according to an embodiment of the disclosure.
FIG. 7 is a configuration diagram of a dishwasher according to an embodiment of the disclosure.
FIG. 8 is a flowchart illustrating a process of controlling activation/deactivation of a manipulation panel based on opening/closing of a door of a dishwasher according to an embodiment of the disclosure.
FIG. 9 is a flowchart illustrating an operation process of a home appliance according to an embodiment of the disclosure.
FIG. 10 is a flowchart illustrating an operation process of a home appliance according to another embodiment of the disclosure.
FIG. 11 is a block diagram of a portable terminal according to an embodiment of the disclosure.
FIG. 12 is a flowchart illustrating a process of displaying information for remotely controlling a home appliance through a portable terminal according to an embodiment of the disclosure.
FIG. 13 is an example diagram illustrating a screen including a menu for remote-control setting on an application according to an embodiment of the disclosure.
FIG. 14 is an example diagram illustrating a screen for guiding a detailed setting for remote-control on an application according to an embodiment of the disclosure.
FIG. 15 is an example diagram illustrating a home screen of a dishwasher on an application according to an embodiment of the disclosure.
FIG. 16 is an example diagram illustrating a screen for receiving various settings related to remote-control on an application according to an embodiment of the disclosure.
FIG. 17 is a screen illustrating a type of a remote-control mode according to an embodiment of the disclosure.
FIG. 18 is a screen displaying guide information on remote-control unavailable mode in which a remote-control mode is unavailable according to an embodiment of the disclosure.
FIG. 19 is a screen displaying guide information on a remote-control one-time-available mode in which a remote-control mode is used once according to an embodiment of the disclosure.
FIG. 20 is a screen displaying guide information on a remote-control always-available mode in which a remote-control mode is always used according to an embodiment of the disclosure.
FIG. 21 is a flowchart illustrating a process in which a portable terminal displays a message indicating a state in which a remote-control mode of a home appliance is set to a remote-control unavailable mode according to an embodiment of the disclosure.
(a) in FIG. 22 is a screen illustrating a state in which the dishwasher according to an embodiment of the present disclosure sets the remote-control mode to the remote-control unavailable mode.

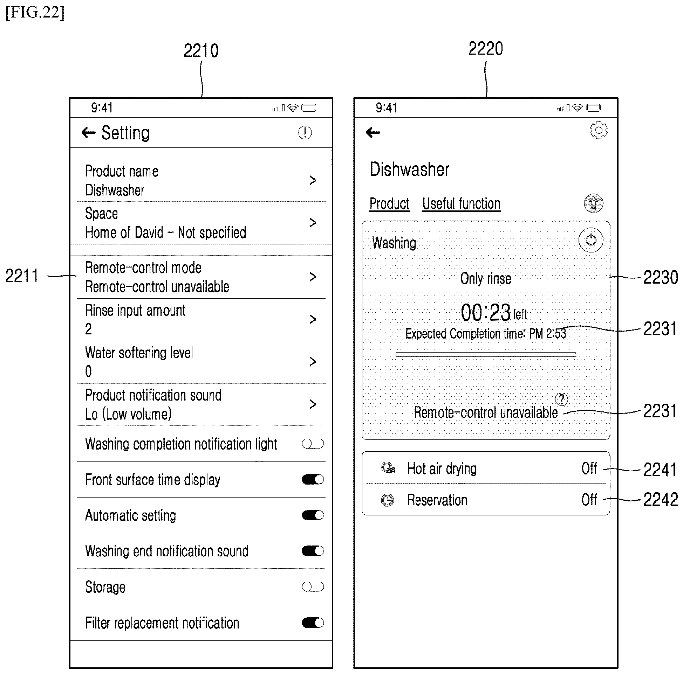

(b) in FIG. 22 is a screen illustrating a state in which the dishwasher is currently operating according to an embodiment of the disclosure.

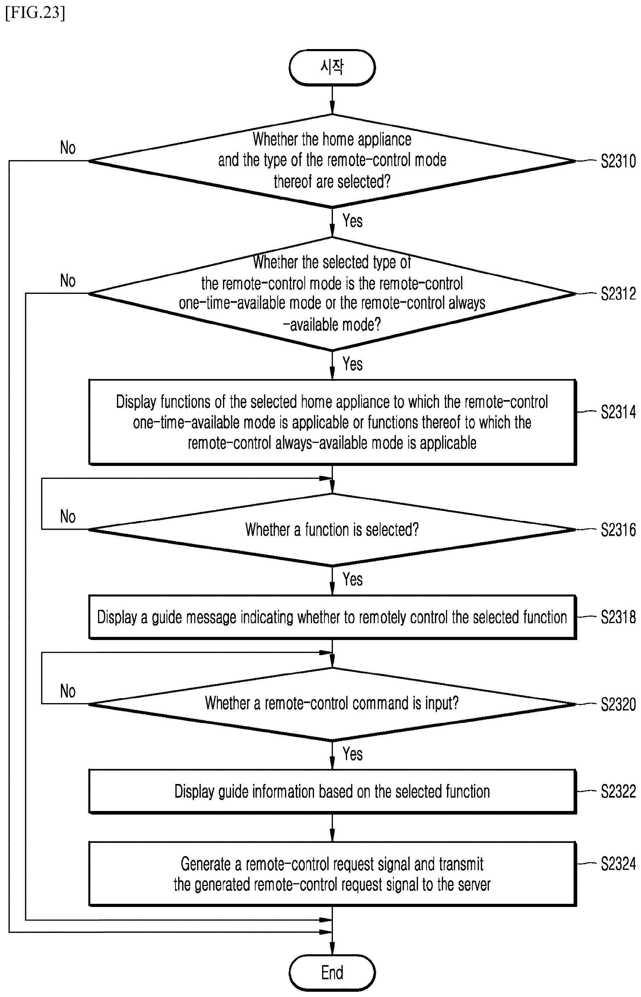

FIG. 23 is a flowchart illustrating an operation process in which a portable terminal operates when a remote-control mode of a home appliance is a remote-control one-time-available mode according to an embodiment of the disclosure.

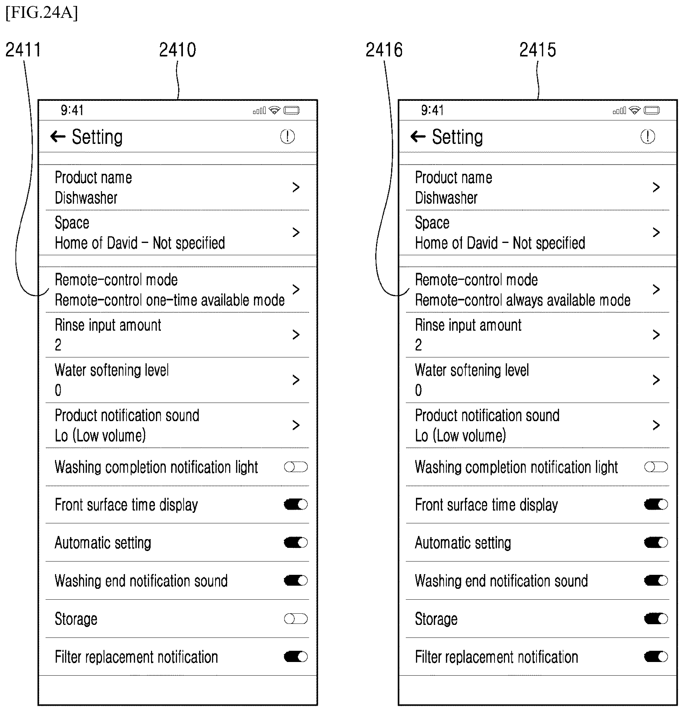

(a) FIG. 24A is a screen illustrating a state in which the dishwasher according to an embodiment of the present disclosure sets the remote-control mode to the remote-control one-time-available mode.
(b) in FIG. 24A is a screen illustrating a state in which the dishwasher according to an embodiment of the present disclosure sets the remote-control mode to the remote-control always-available mode.

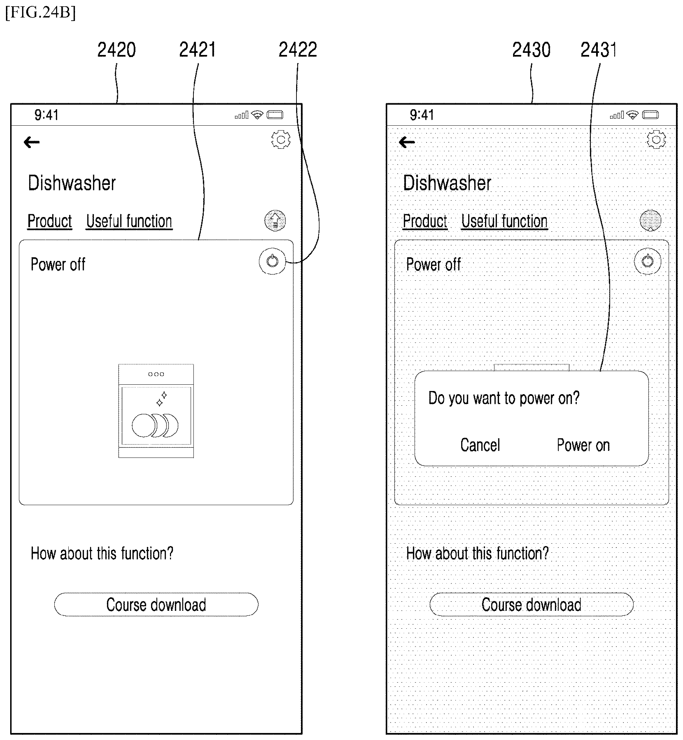

(c) in FIG. 24B is a screen illustrating a state in which power of the dishwasher according to an embodiment of the present disclosure is turned off.
(d) in FIG. 24B is a screen illustrating a process of turning on power of the dishwasher according to an embodiment of the disclosure.

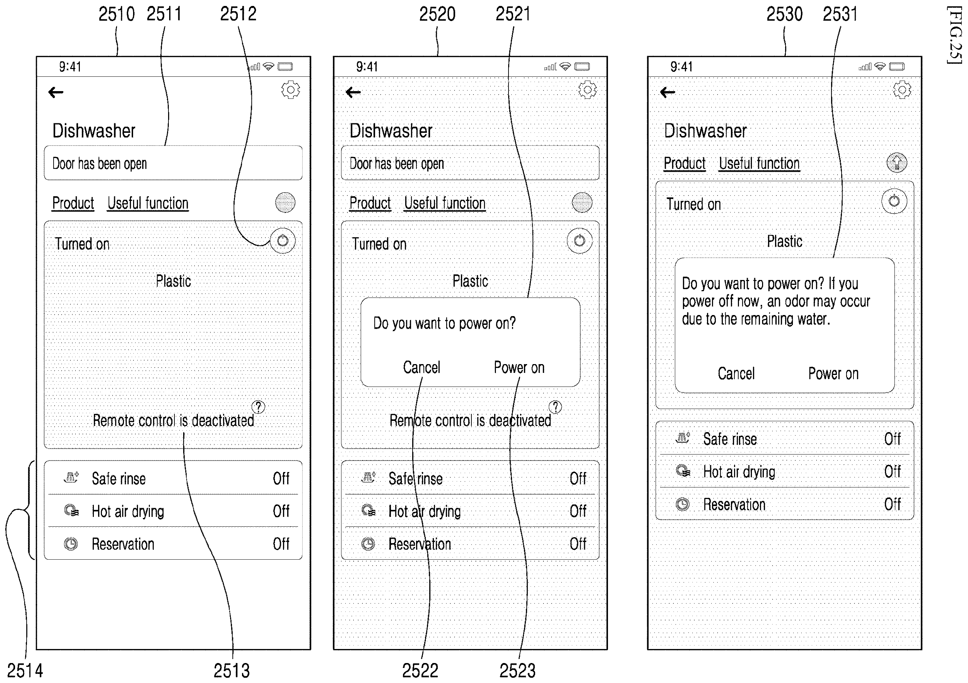

(a) FIG. 25 is a screen illustrating a state in which an event occurs in the dishwasher according to an embodiment of the disclosure.
(b) in FIG. 25 is a screen illustrating a process of turning off power of the dishwasher according to an embodiment of the disclosure.
(c) in FIG. 25 is a screen showing a guide message when the power of the dishwasher is turned off according to an embodiment of the disclosure.

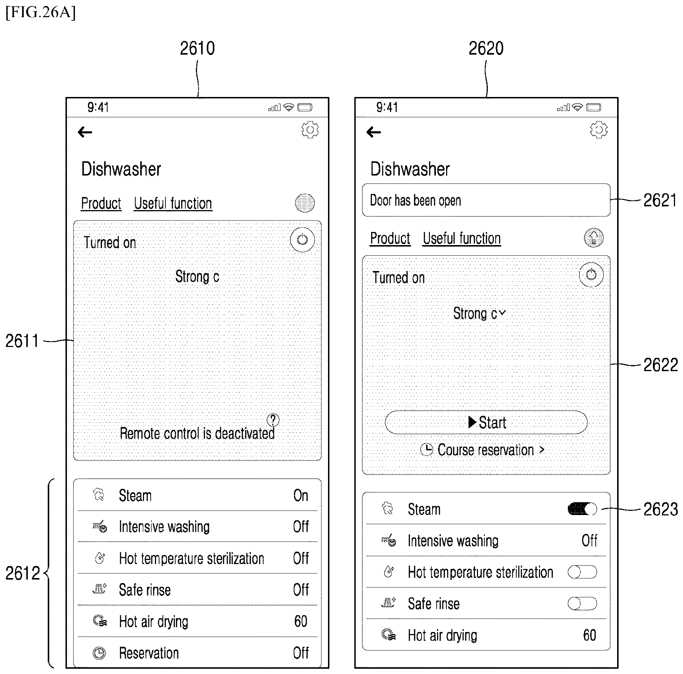

(a) in FIG. 26A is a screen illustrating a state in which remote-control on a steam cycle of the dishwasher is turned off according to an embodiment of the disclosure.
(b) in FIG. 26A is a screen illustrating a state in which an event occurs in a state in which remote-control on a steam cycle of a dishwasher is turned on according to an embodiment of the disclosure.

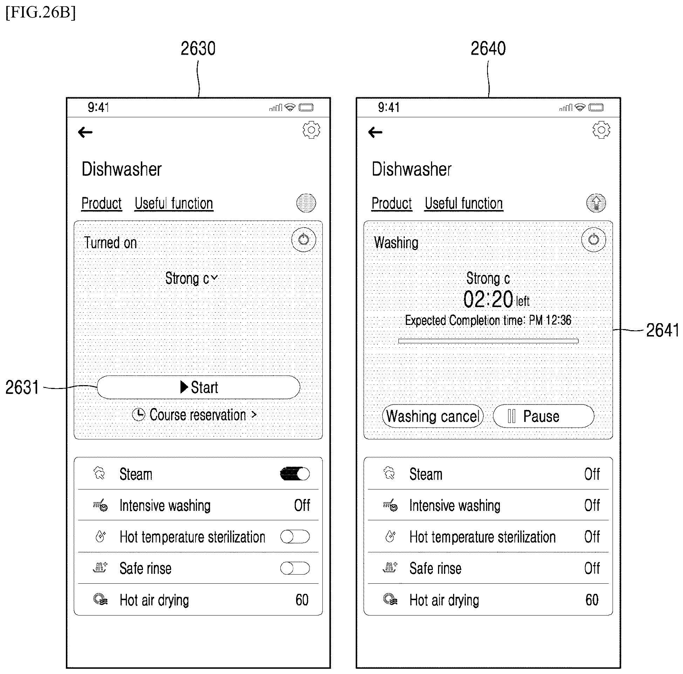

(c) in FIG. 26B is a screen illustrating a state in which an event has been terminated in a state in which remote-control on a steam cycle of a dishwasher is turned on according to an embodiment of the disclosure.
(d) in FIG. 26B is a screen showing a state after an event has been terminated in a state in which remote-control on a steam cycle of a dishwasher is turned on according to an embodiment of the disclosure.

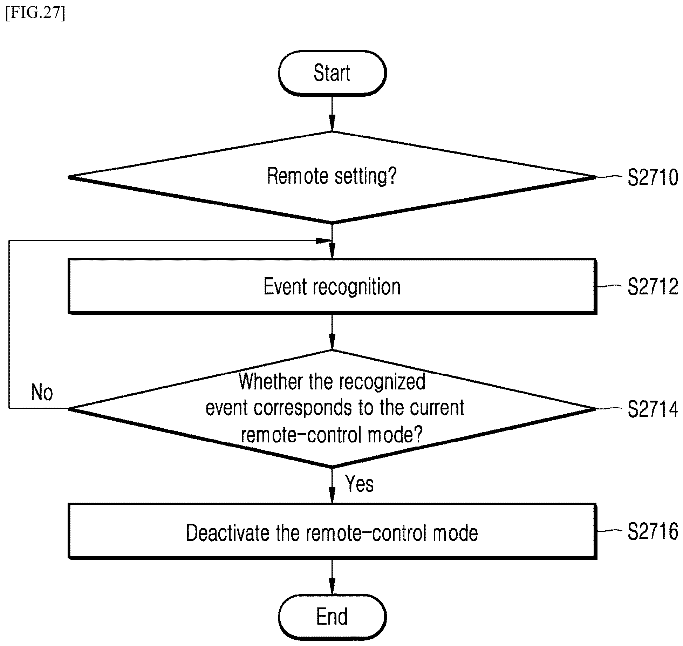

FIG. 27 is a flowchart illustrating an operation process of a home appliance according to another embodiment of the disclosure.

### DETAILED DESCRIPTIONS

The above-described purposes, features, and advantages will be described in detail with reference to the accompanying drawings, and accordingly, a person having ordinary skill in the art to which the present disclosure belongs will be able to easily implement the technical idea of the present disclosure. In describing the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

Although the first, second, etc. are used to describe various components, these components are not limited by these terms. These terms are used to distinguish only one component from another component. Thus, unless otherwise stated, the first component may be the second component.

Hereinafter, when one component is disposed on, under, or on top of another component, one component may contact another component or may be spaced from another component or still another component may be interposed therebetween.

In addition, when a component is described as being "connected" or "coupled" to another component, it should be understood that the components may be directly connected or coupled to each other, or still another component may be "intervened" therebetween, or the components may be "connected" or "coupled" to each other via still another component.

As used herein, the singular constitutes "a" and "an" are intended to include the plural constitutes as well, unless the context clearly indicates otherwise.

It will be further understood that the terms "comprise", "comprising", "include", and "including" when used in this disclosure, specify the presence of the stated components or steps, but do not preclude the presence or addition of one or more components or steps other than the stated components or steps.

Throughout the present disclosure, "A and/or B" means A, B, or A and B, unless otherwise specified, and "C to D" means C inclusive to D inclusive unless otherwise specified.

Hereinafter, a home appliance according to some embodiments of the present disclosure and a system for remotely controlling the home appliance will be described.

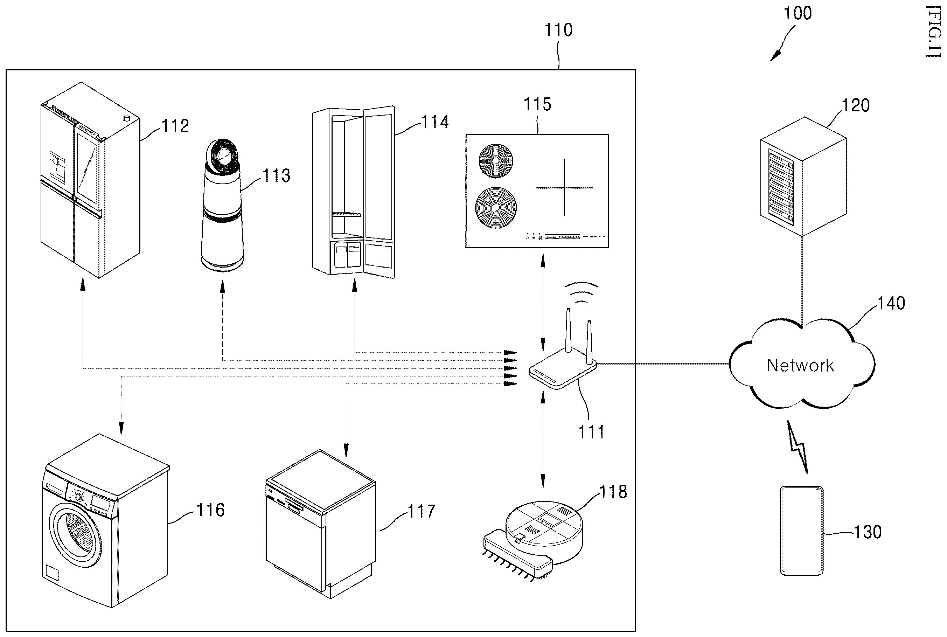

FIG. 1 is an example diagram illustrating a home appliance system in a home according to an embodiment of the disclosure.

Referring to FIG. 1, a home appliance system 100 in a home according to an embodiment of the present disclosure may include a plurality of home appliances 110, a server 120 (e.g., a LG^{™} ThinQ server), and a portable terminal 130 that performs monitoring and remote-control of each of the plurality of home appliances 110.

A configuration of the home appliance system 100 illustrated in FIG. 1 is according to an embodiment, and the components of the home appliance system 100 are not limited to the embodiment illustrated in FIG. 1, and some components may be added, changed, or deleted as necessary.

For example, the server 120, the portable terminal 130, and a router 111 in the home may transmit and receive a signal for remotely controlling the plurality of home appliances 110 to and from each other through a network 140. In addition, an application (e.g., a LG^{™} ThinQ application) for remotely controlling the plurality of home appliances 110 is installed in the portable terminal 130.

In addition, each home appliance may transmit a signal related to remote-control to the server 120 through the router 111, or may receive a control signal related to remote-control from the server 120 through the router 111.

The router 111 may be connected to a communication line installed in a place such as home or office to transmit a wireless signal. Each of the plurality of home appliances 110 is positioned within a range in which each of the plurality of home appliances 110 is capable of receiving a wireless signal of the router 111.

The router 111 may receive a wireless signal transmitted from the home appliance (e.g., a dishwasher 117) and the user terminal 130 communicatively connected to the router 111 and transmit the wireless signal to an external device through the communication line, or may convert a signal input from the external device through a communication line into a wireless signal and transmit the wireless signal.

Accordingly, the home appliance (e.g., the dishwasher 117) connected to the router 111 may communicate with the server 120.

According to an embodiment, when the home appliance is remotely controlled through the portable terminal 130, a signal transmitted from the portable terminal 130 may be transmitted to this home appliance through the server 120 and the router 111.

In addition, when remote-control is directly performed in the home appliance, this home appliance may transmit a signal related to the remote-control to the portable terminal 130 through the router 111 and the server 120.

Alternatively, when a communication protocol (e.g., Bluetooth, Wi-Fi, or the like) is provided to the home appliance in the home appliance system 100, one-to-one communication between the home appliance and the portable terminal may be established.

According to an embodiment, the plurality of home appliances 110 may include a refrigerator 112, an air purifier 113, a clothing care apparatus 114, an induction heater 115, a washing machine 116, the dishwasher 117, and a robot cleaner 118 disposed in the home. In addition, the plurality of home appliances 110 may include various home appliances (e.g., an oven, a vacuum cleaner, etc.) that may be disposed and used in the home.

According to an embodiment, each home appliance of the plurality of home appliances 110 may receive a control signal (or information) for remotely controlling the home appliance from the portable terminal 130. Each home appliance may operate in a remote-control mode using the portable terminal 130 based on such information.

As described above, in order for each home appliance of the plurality of home appliances 110 to operate in the remote-control mode, the portable terminal 130 may request the server 120 to upgrade a program for remotely controlling the home appliance, and the server 120 may transmit this program to the portable terminal 130.

For such an upgrade, the portable terminal 130 may transmit information including an identifier (e.g., a phone number (or a unique ID)) of the portable terminal, a model name of the home appliance, a serial number of the home appliance, a software version of the home appliance, software contents, etc. to the server 120, and the server 120 may store the various information on the home appliance therein.

In addition, the server 120 may compare the information received from the portable terminal 130 with information previously registered in the server 120 and determine whether a software upgrade of the home appliance is required or a software upgrade scheme of the home appliance, based on the comparing result, and may also select one of a general upgrade and an automatic upgrade.

Alternatively, the server 120 may select one of the general upgrade and the automatic upgrade based on the model name, the serial number, etc. of the home appliance.

Alternatively, the server 120 may transmit software or information required for the upgrade to the portable terminal 130 in advance in a push manner.

In order to provide the upgrade of an application for remotely controlling the home appliance, the server 120 may store firmware of the home appliance and data (i.e., content program data) about a content program executed on the firmware into a memory (not shown).

Each home appliance of the plurality of home appliances 110 in the home may operate in a remote-control unavailable mode (e.g., Off Mode) in which the home appliance does not operate in the remote-control mode, a remote-control one-time-available mode (e.g., Manual Mode) in which the home appliances operates one time, or a remote-control always-available mode (e.g., Permanent Mode).

In addition, each home appliance may operate in the remote-control multiple-times (e.g., three times, 21 times, etc.) available mode, or may operate in the remote-control predetermined time duration (e.g., three hours, 24 hours, etc.) available mode. As described above, the home appliance may operate in the remote-control unavailable mode, the remote-control one-time-available mode, the remote-control multiple-times available mode, the remote-control predetermined time duration available mode, or the remote-control always-available mode, based on the type of the home appliance.

In addition, each home appliance may provide different remote-control deactivation conditions based on different remote-control available modes.

To this end, each home appliance of the plurality of home appliances 110 may transmit and receive a signal or data to and from the server 120 in a wireless manner or wired manner. For example, the home appliance may transmit the signal or the data to the server 120 through the router 111.

Alternatively, the home appliance may receive the signal transmitted from the portable terminal 130 through the server (e.g., the LG^{™} ThinQ server) 120 and the router 111. Such a signal or data may include a program for remote-control, a control signal, operation information, pairing information, etc..

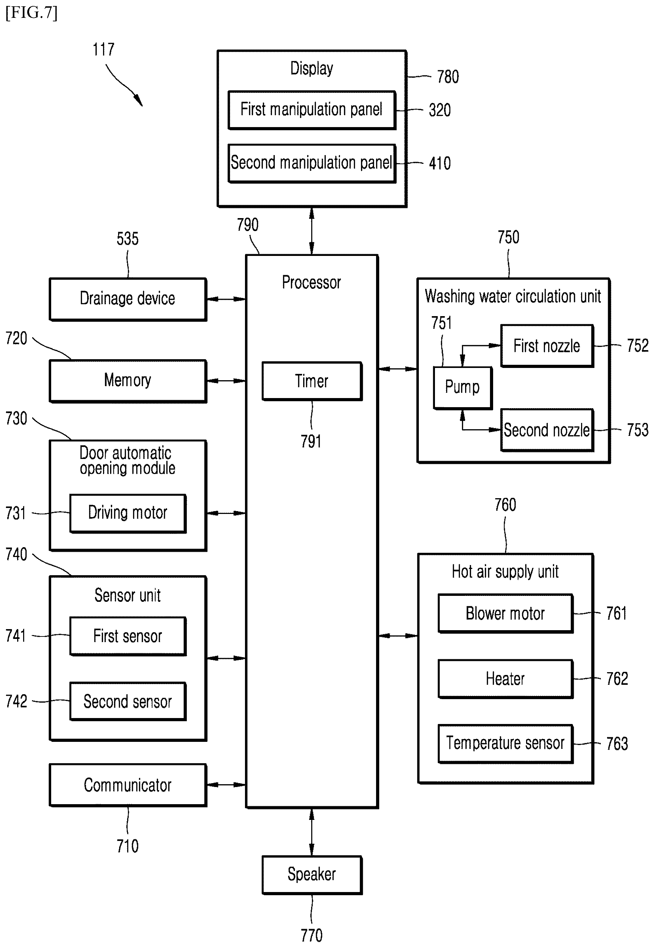

According to an embodiment, each home appliance of the plurality of home appliances 110 may store the signal or data received through the server 120 in a memory (e.g., 720 of FIG. 7).

According to an embodiment, the server 120 may transmit a program (e.g., an LG^{™} ThinQ application) capable of remotely controlling the home appliance to at least one home appliance through the router 111.

Alternatively, the server 120 may transmit the program (e.g., a LG^{™} ThinQ application) for remotely controlling the home appliance to the portable terminal 130.

According to an embodiment, the portable terminal 130 may install the program (e.g., the LG^{™} ThinQ application) capable of remotely controlling the home appliance in the home, and may remotely control at least one home appliance in the home through the program.

For example, the remote-control mode include a mode in which the home appliance does not operate in the remote-control mode, a mode in which the home appliance is remotely controlled once, and a mode in which the home appliance is always remotely controlled.

In addition, the remote-control mode may include a mode in which the home appliance operates in the remote control mode a plurality of times (e.g., three times, 21 times, etc.) or a mode in which the home appliance operates in the remote-control mode for a predetermined time duration (e.g., three hours, 24 hours, etc.).

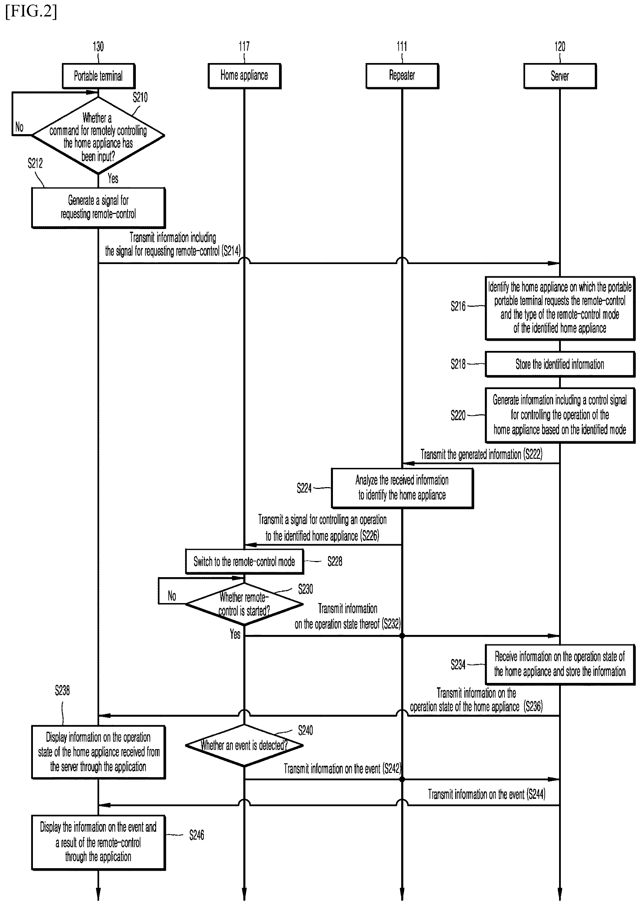

FIG. 2 is a flowchart illustrating an operation process of a system for remotely controlling a home appliance according to an embodiment of the disclosure.

Hereinafter, an operation process of a system for remotely controlling a home appliance according to an embodiment of the present disclosure will be described in detail with reference to FIG. 2.

The system according to the present disclosure may include the home appliance (e.g., the dishwasher 117), the portable terminal 130, and the server 120.

Hereinafter, a case in which the home appliance is the dishwasher 117 will be described. However, the technical idea according to the present disclosure may be applied not only to the dishwasher, but also to other home appliances in the home (e.g., the refrigerator 112, the air purifier 113, the clothing care apparatus 114, the induction heater 115, the washing machine 116, the robot cleaner 118, and the oven (not shown)).

First, the portable terminal 130 may request a function for remotely controlling at least one home appliance in the home to the server 120 through the application, and receive the function (or program) for remotely controlling at least one home appliance in the home from the server 120 in response to the request.

Thereafter, the portable terminal 130 may add and install the function (or program) received from the server 120 to the application (e.g., the LG^{™} ThinQ application).

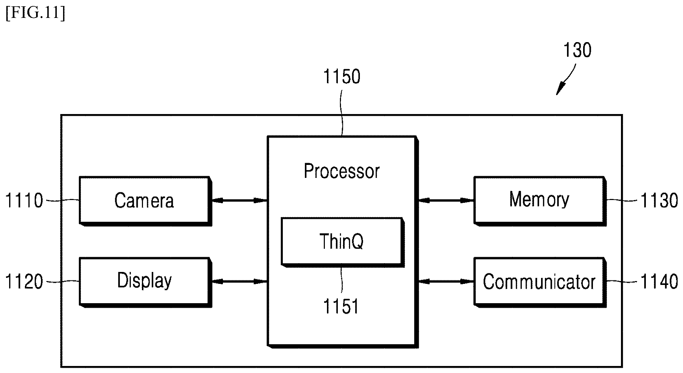

The portable terminal 130 may display the application in which the function of remotely controlling at least one home appliance has been installed on a display 1120 of FIG. 11. For example, the portable terminal 130 may receive information on a current state (e.g., a remote-control mode, an operation state, functions of each home appliance, an error state, etc.) of the home appliance from the server 120 and display the information through the application in real time.

Alternatively, the portable terminal 130 and the home appliances 110 may perform one-to-one communication with each other through a short-range communication protocol (e.g., Bluetooth, Wi-Fi, etc.) without communication with the server 120.

According to an embodiment, the portable terminal 130 may identify whether a command for remotely controlling the home appliance (e.g., the dishwasher 117) has been input through the application displayed on the display (1120 of FIG. 11) in in S210.

For example, the portable terminal 130 may select a home appliance to be remotely controlled by a user through the application, and may receive a command regarding whether to allow the selected home appliance to operate in the remote-control one-time-available mode or always. In addition, the portable terminal 130 may receive a command about whether to allow each home appliance to operate in the remote-control multiple-times (e.g., three times, 21 times, etc.) available mode or the remote-control predetermined time duration (e.g., three hours, 24 hours, etc.) available mode.

Alternatively, the portable terminal 130 may receive a command for not using the remote-control mode for preventing the selected home appliance from being remotely controlled through the application.

According to an embodiment, the portable terminal 130 may generate a signal for requesting remote-control in in S212. When a command for remotely controlling the selected home appliance (e.g., the dishwasher 117) is input to the portable terminal 130 from the user, the portable terminal 130 may generate a request signal including an identifier (e.g., a model name) of the selected home appliance (e.g., the dishwasher 117), an identifier (e.g., a telephone number) of the portable terminal 130, a type of a remote-control mode (e.g., a remote-control unavailable mode, a remote-control one-time-available mode, or a remote-control always-available mode), and a remotely-controlled function (e.g., steam, intensive washing, high-temperature sterilization, safe rinsing, hot air drying, reservation, power on/off, etc.) of the selected home appliance (e.g., the dishwasher 117).

According to an embodiment, the portable terminal 130 may transmit information including the signal for requesting remote-control to the server 120 in S214. The portable terminal 130 may generate information including various information (e.g., a remote-control request time, an Internet address of the server 120) in the request signal generated in the process S212, and then transmit the information to the server 120.

According to an embodiment, the server 120 may identify the home appliance on which the portable terminal 130 requests the remote-control and the type of the remote-control mode of the identified home appliance in S216. The server 120 may analyze the request signal received from the portable terminal 130 and may identify the type (e.g., the dishwasher 117) of the home appliance which is requested to be remotely controlled, the type of the remote-control mode of this home appliance (e.g., the remote-control unavailable mode, the remote-control one-time-available mode, or the remote-control always-available mode), and the remotely-controlled function (e.g., steam, intensive washing, high-temperature sterilization, safe rinsing, hot air drying, reservation, etc.) of this home appliance (e.g., the dishwasher 117).

According to an embodiment, the server 120 may store the identified information in a memory (not shown) in S218. The server 120 may identify the home appliance (e.g., the dishwasher 117) requested to be remotely controlled and the remoted controlled function thereof, based on the identifier of the portable terminal 130 and may store the identified functions in a memory (not shown).

This identification result may be used to determine a function on which a remote-control mode is frequently used by customers to develop or utilize a product in the future.

According to an embodiment, the server 120 may generate information including a control signal for controlling the operation of the home appliance based on the identified mode in S220. The server 120 may generate a signal including instructions for controlling a remote-control mode (e.g., a remote-control unavailable mode, a remote-control one-time-available mode, or a remote-control always-available mode) on the home appliance (e.g., the dishwasher 117) requested to be remotely controlled as identified in the process S216, and a remotely-controlled function (e.g., steam, intensive washing, high-temperature sterilization, safe rinsing, hot air drying, reservation, etc.) of this home appliance (e.g., the dishwasher 117).

For example, the server 120 may generate information obtained by including the identifier (e.g., a phone number) of the portable terminal 130 in the generated signal.

According to an embodiment, the server 120 may transmit the generated information to the router 111 in S222. Based on the user's request (e.g., the type of the remote-control mode of the home appliance, a function to be remotely controlled thereof), the server 120 may transmit the information for allowing the user to remotely control the home appliance (e.g., the dish washer 117) through the portable terminal 130 to the router 111 which in turn may provide the transmitted information to the home appliance (e.g., the dish washer 117).

According to an embodiment, the router 111 may analyze the received information to identify the home appliance in S224. The router 111 may identify the home appliance based on the information received from the server 120 and forward the information to the identified home appliance.

According to an embodiment, the router 111 may transmit a signal for controlling an operation to the identified home appliance in S226. Alternatively, the router 111 may analyze the information received from the server 120 and provide the analysis result to the identified home appliance or may perform a function of simply forwarding the received information to the identified home appliance.

According to an embodiment, the home appliance (e.g., the dishwasher 117) may switch to the remote-control mode in S228. The home appliance (e.g., the dishwasher 117) may switch (or set) a current operation mode (e.g., the remote-control unavailable mode) to the remote-control mode (e.g., the remote-control one-time-available mode or the remote-control always-available mode) based on the information received through the router 111.

Alternatively, the home appliance (e.g., the dishwasher 117) may also switch the current operation mode (e.g., the remote-control one-time-available mode or the remote-control always-available mode) to the remote-control unavailable mode.

According to an embodiment, the home appliance (e.g., the dishwasher 117) may identify whether remote-control is started in S230. The home appliance (e.g., the dishwasher 117) may identify whether the home appliance (e.g., the dishwasher 117) is switched to the remote-control mode (e.g., the remote-control one-time-available mode or the remote-control always-available mode) based on the received information and thus is currently operating in the switched remote-control mode.

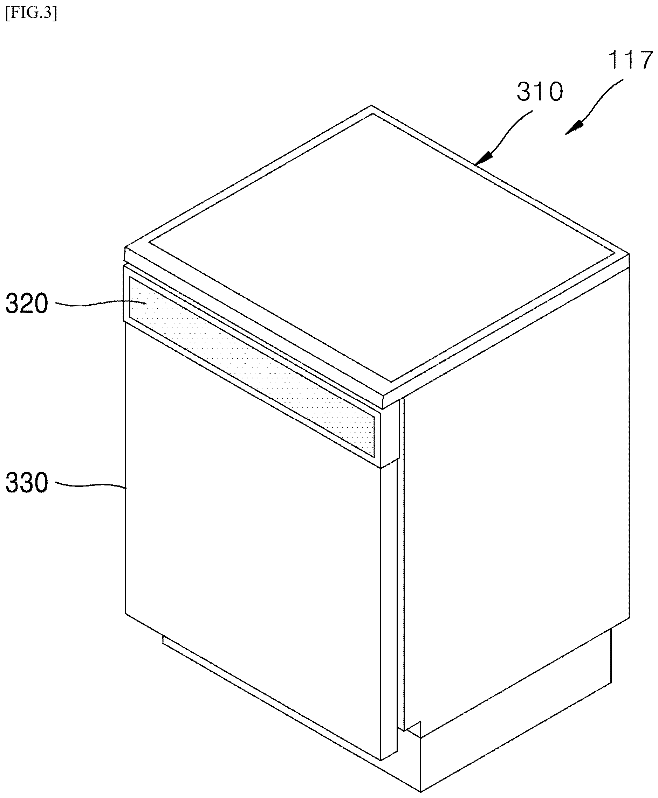

When the home appliance (e.g., the dishwasher 117) has been switched to the remote-control mode (e.g., the remote-control one-time-available mode or the remote-control always-available mode), the home appliance (e.g., the dishwasher 117) may display information on the switched remote-control mode on the display (e.g., a first manipulation panel 320 of FIG. 3).

For example, when the home appliance (e.g., the dishwasher 117) has been switched to the remote-control one-time-available mode, the home appliance (e.g., the dishwasher 117) may output a predetermined color (e.g., green) through a light-emitting element of the first manipulation panel (320 of FIG. 3).

Alternatively, when the home appliance (e.g., the dishwasher 117) has been switched to the remote-control always-available mode, the home appliance (e.g., the dishwasher 117) may output a predetermined color (e.g., blue) through the light-emitting element of the first manipulation panel (320 of FIG. 3).

As described above, the home appliance (e.g., the dishwasher 117) may output different colors based on the different types of the remote-control modes to allow the user to recognize the type of the current remote-control mode of the home appliance (e.g., the dishwasher 117).

When the remote-control mode is the remote-control unavailable mode, the home appliance (e.g., the dishwasher 117) may turn off the light-emitting element of the first manipulation panel (320 of FIG. 3).

According to an embodiment, the home appliance (e.g., the dishwasher 117) may transmit information on the operation state thereof to the server 120 through the router 111 in S232. For example, the information may include information indicating that the remote-control of the home appliance (e.g., the dishwasher 117) is started.

As described above, the home appliance (e.g., the dishwasher 117) transmits the information on the operation state to the server 120 through the router 111, so that the user may remotely and in real time check various situations regarding the remote-control through the portable terminal 130.

According to an embodiment, the server 120 may receive information on the operation state of the home appliance (e.g., the dishwasher 117) and store the information in the memory (not shown) in S234. The server 120 may receive various information about the home appliance (e.g., the dishwasher 117) which is currently operating in the remote-control mode and store the received information in the memory (not shown).

According to an embodiment, the server 120 may transmit information on the operation state of the home appliance (e.g., the dishwasher 117) to the portable terminal 130 in S236. The server 120 may transmit, in real time, to the portable terminal 130, information on an operation state of the home appliance (e.g., the dishwasher 117) which is operating based on the remote-control mode.

According to an embodiment, the portable terminal 130 may display information on the operation state of the home appliance (e.g., the dishwasher 117) received from the server 120 through the application in S238. The portable terminal 130 may display, in real time, through the application (e.g., the LG^{™} ThinQ application), operation state information about a remotely-controlled function of the home appliance (e.g., the dishwasher 117) selected by the user.

According to an embodiment, the home appliance (e.g., the dishwasher 117) may identify whether an event is detected in S240. The home appliance (e.g., the dishwasher 117) may identify whether an event for deactivating the remote-control mode occurs while operating in the remote-control mode.

In response to that the event is detected, the home appliance (e.g., the dishwasher 117) may identify whether the user has selected the remote-control one-time-available mode or the remote-control always-available mode for the home appliance (e.g., the dishwasher 117) in the process S210.

Alternatively, when the signal has been received in the process S226, the home appliance (e.g., the dishwasher 117) may determine whether the user has selected the remote-control one-time-available mode or the remote-control always-available mode for the home appliance (e.g., the dishwasher 117) in the process S210.

According to an embodiment, when the remote-control mode is the remote-control one-time-available mode, the event (e.g., a first event) may include switching of the remote-control one-time-available mode selected through the display of the dishwasher 117 into the remote-control unavailable mode or the remote-control always-available mode.

In addition, when the remote-control mode is the remote-control one-time-available mode, the event (e.g., the first event) may include sensing of opening of the door (330 of FIG. 3) of the home appliance (e.g., the dishwasher 117), sensing of a key input on the display, completion of the cycle (e.g., preliminary washing, main washing, rinsing, heating rinsing, hot air drying, etc.) of the home appliance (e.g., the dishwasher 117), occurrence of an error (e.g., a failure, abnormal operation, etc.), and/or an input related to power on/off (ON/OFF) of the home appliance (e.g., the dishwasher 117).

As described above, when the occurrence of the event (e.g., the first event) is detected in the state in which the home appliance (e.g., the dishwasher 117) is set to the remote-control one-time-available mode, the home appliance (e.g., the dishwasher 117) may switch the remote-control mode to the inactive state.

In addition, according to an embodiment, when the remote-control mode is the remote-control always-available mode, the event (e.g., a second event) may include switching of the remote-control always-available mode selected through a display 780 (see FIG. 7) of the dishwasher 117 to the remote-control unavailable mode or the remote-control one-time-available mode.

In addition, when the remote-control mode is the remote-control always-available mode, the event (e.g., the second event) may include an error occurrence of the home appliance (e.g., the dishwasher 117).

As described above, when the occurrence of the event (e.g., the second event) is detected while the home appliance (e.g., the dishwasher 117) is set to the remote-control always-available mode, the home appliance (e.g., the dishwasher 117) may switch the remote-control mode to the inactive state.

According to an embodiment, the home appliance (e.g., the dishwasher 117) may transmit information on the event to the server 120 through the router 111 in S242. The home appliance (e.g., the dishwasher 117) may transmit information on the type of the event, information on the function stopped based on the detection of the event, and information indicating that the remote-control mode is switched to the inactive state based on the detection of the event to the server 120 through the router 111.

According to an embodiment, the server 120 may transmit information on the event to the portable terminal 130 in S244. The server 120 may transmit the information received from the home appliance (e.g., the dishwasher 117) to the portable terminal 130 in real time in the process S242.

For example, the server 120 may identify the identifier (e.g., a phone number) of the portable terminal 130 that has transmitted the information including the remote-control request signal in the process S214, and may transmit the information on the event received from the home appliance (e.g., the dishwasher 117) to the portable terminal 130 having the identified identifier in real time.

According to an embodiment, the portable terminal 130 may display the information on the event and a result of the remote-control through the application in S246. The portable terminal 130 may display the information about the event and the result of remote-control received from the server 120 on the application in real time, based on the detection of the event occurring in the home appliance (e.g., the dishwasher 117).

As described above, the user may remotely control the home appliance (e.g., the dishwasher 117) through the portable terminal 130 at a long distance from the dishwasher 117.

In addition, the user may select whether to operate the dishwasher 117 in the remote-control one-time-available mode or the remote-control always-available mode through an input on the display (e.g., the first manipulation panel 320) of the dishwasher 117.

Alternatively, the user may select whether to operate the dishwasher 117 in the remote-control multiple-times (e.g., three times, 21 times, etc.) available mode or in the remote-control predetermined time duration (e.g., three hours, 24 hours, etc.) available mode through the input on the display (e.g., the first manipulation panel 320) of the dishwasher 117

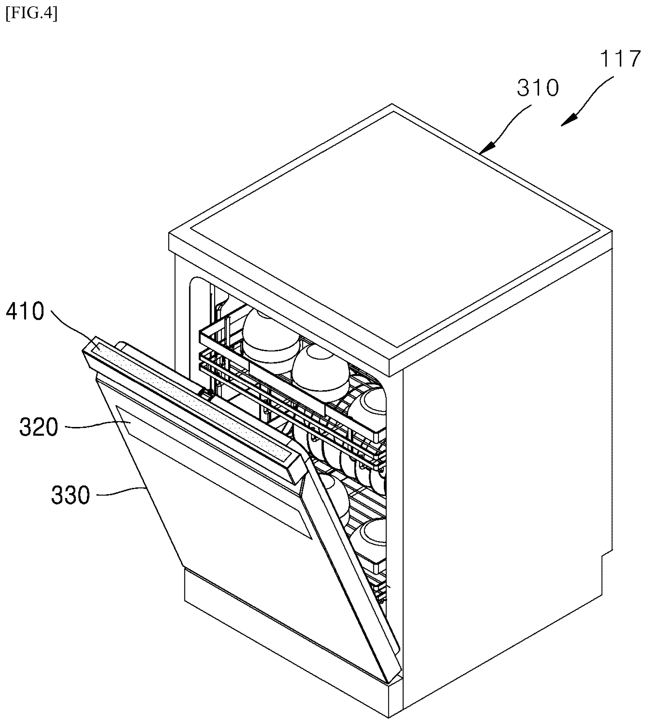

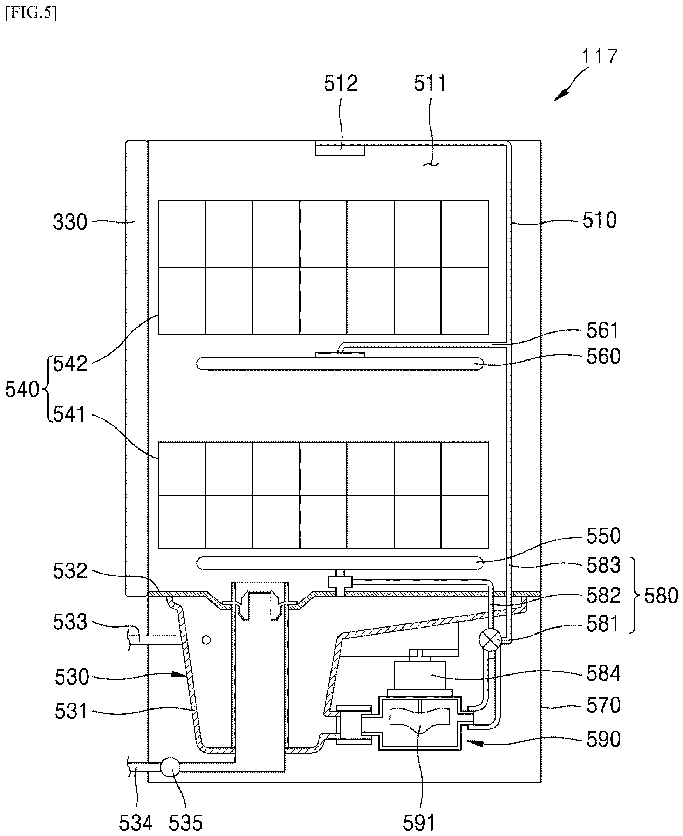

FIG. 3 is an example diagram illustrating a state in which a door of a dishwasher is closed according to an embodiment of the disclosure. FIG. 4 is an example diagram illustrating a state in which a door of a dishwasher is opened according to an embodiment of the disclosure. FIG. 5 is a schematic cross-sectional view of a dishwasher according to an embodiment of the disclosure.

Referring to FIGS. 3, 4, and 5, the dishwasher 117 may include a main body 310 having a washing space defined therein and having an open front, a tub 510 installed inside the main body 310 and defining a washing space 511 in which a washing target is washed and accommodating the washing target, and a door 330 pivotably coupled to a base 570 and selectively opening and closing the washing space 511.

According to an embodiment, the door 330 of the dishwasher 117 may include at least one manipulation panel configured to input a command for controlling the operation of the dishwasher 117.

For example, as shown in FIG. 3, the first manipulation panel 320 may be disposed on a front surface of the door 330, and as shown in FIG. 4, a second manipulation panel 410 may be disposed on an upper surface of the door 330.

Alternatively, the dishwasher 117 may include the manipulation panel (e.g., the first manipulation panel 320) only on the front surface of the door 330.

Alternatively, the dishwasher 117 may include the manipulation panel (e.g., the second manipulation panel 410) only on the upper surface of the door 330.

The number of manipulation panels or the arrangement position of the manipulation panels of the home appliance according to the present disclosure are not limited thereto, and various numbers of manipulation panels may be provided or the manipulation panels may be disposed at various positions.

Each of the manipulation panels 320 and 410 may visually display information on a current operating state of the dishwasher 117, receive a user's selection manipulation, and include a power button to which a user's manipulation for turning on/off the power of the dishwasher 117 is input.

For example, each of the manipulation panels 320 and 410 may include at least one LED indicating a current operation state (e.g., washing, rinsing, drying, etc.) of the dishwasher 117 and a current operation mode (e.g., the remote-control unavailable mode, remote-control one-time-available mode, the remote-control always-available mode, etc.).

According to an embodiment, at least one sensor for detecting the opening of the door 330 may be disposed at an appropriate position in the door 330. In addition, a door automatic opening module for automatically opening the door 330 may be provided outside an upper surface of the tub 510 of the dishwasher 117.

For example, the sensor may be disposed on an area of the main body 310 of the dishwasher 117 in contact with an upper surface of the door 330. In addition, another sensor may be disposed adjacent to a hinge to detect the opening of the door 330.

Alternatively, for example, when the dishwasher 117 is of a built-in model, the main body 310 may not be present. In this case, the sensor, the automatic door opening module, and a door latch may be disposed on an outer surface of the tub 510, for example, an upper surface thereof.

According to an embodiment, the dishwasher 117 may include a sump 530 disposed under the tub 510 to store washing water therein, a rack 540 provided inside the tub 510 to accommodate the washing target thereon, and a spray arm 512, 550, and 560 to spray washing water toward the washing target accommodated on the rack 540. In this case, the washing target may be, for example, dishes such as bowls and plates, chopsticks, and other cooking utensils.

The tub 510 defines the washing space 511 and accommodates dishes therein, and the washing space 511 may receive therein the rack 540 and the spray arm 512, 550, and 560. The tub 510 has a shape in which one surface is open, and the open surface may be opened and closed by the door 330.

The door 300 may be pivotably connected to a housing of the dishwasher 117 to selectively open and close the washing space 511. For example, a bottom of the door 330 may be hinge-coupled to the housing.

In this case, the door 330 may pivot around the hinge to open and close the tub 510. When the door 330 is opened, the rack 540 may be withdrawn out of the dishwasher 117. While the rack 540 is withdrawn out of the dishwasher, the rack 540 may be supported by the door 330.

The sump 530 may include a storage 531 for storing the washing water therein, a sump cover 532 for isolating the storage 531 from the tub 510, a water supply pipe 533 for supplying the washing water from an external source to the storage 531, a drain pipe 534 for discharging the washing water from the storage 531 to the outside, and a water supply pump 590 and a supply flow path 580 for supplying the washing water from the storage 531 to the spray arm 512, 550, and 560. The washing water of the storage 531 is discharged to the outside under an operation of a drainage device (e.g., a drainage motor 535).

The sump cover 532 may constitute a top of the sump and may isolate the sump from the tub 510. In addition, the sump cover 532 may have a plurality of collection holes defined therein collecting the washing water sprayed into the washing space 511 through the spray arm 512, 550, and 560.

That is, the washing water sprayed from the spray arm 512, 550, and 560 may drop to a bottom of the washing space 511, flow through the sump cover 532, and be collected to the storage 531 of the sump again.

The water supply pump 590 may be disposed on a side of the storage 531 or under the storage 531 and may supply the washing water to the spray arm 512, 550, and 560.

One end of the water supply pump 590 may be connected to the storage 531 and the other end thereof may be connected to the supply flow path 580. An impeller 591, a motor 584, etc. may be disposed inside the water supply pump 590. When the power is supplied to the motor 584, the impeller 591 may rotate, such that the washing water of the storage 531 may be supplied to the spray arm 512, 550, and 560 through the supply flow path 580.

The supply flow path 580 may selectively supply the washing water supplied from the water supply pump 590 to the spray arms 512, 550, and 560.

The supply flow path 580 may include a first supply flow path 582 connected to the lower spray arm 550, a second supply flow path 583 connected to the upper spray arm 560 and a top nozzle 512, and a supply flow path switching valve 581 selectively opening and closing the supply flow paths 582 and 561. In this regard, the supply flow path switching valve 581 may control the first and second supply flow paths 582 and 583 to be sequentially opened or to be simultaneously opened.

At least one rack 540 for storing dishes therein may be disposed in the washing space 511. FIG. 5 illustrates the dishwasher 117 having two racks. However, the present disclosure is not limited thereto.

For example, the dishwasher 117 may include only one rack or may include three or more racks. In this regard, the number of spray arms may vary depending on the number of racks.

The rack 540 may include a lower rack 541 and an upper rack 542 for storing dishes therein. The lower rack 541 may be disposed in the washing space 511 and may accommodate the dishes therein. The upper rack 542 may be disposed on top of the lower rack 541 and may accommodate the dishes therein. In another example, a top rack may be disposed in a space between an upper side of the upper rack 542 and the top nozzle 512, and the dishes may be accommodated in the top rack.

The lower rack 541 may be located on top of the sump, and the upper rack 542 may be disposed on top of the lower rack 541. The lower rack 541, the upper rack 542, and the top rack may be withdrawn to the outside through the open surface of the tub 510.

To this end, a rail-type holder may be disposed on an inner surface of the tub 510, and wheels may be disposed on a bottom of each of the racks 541 and 542. The user may withdraw the rack 540 to the outside and then may place the dishes therein, or may take out the washed dishes out of the rack.

The spray arm may be disposed in the tub 510 to spray the washing water toward the dishes in the rack 540. The spray arm may include the lower spray arm 550, the upper spray arm 560, and the top nozzle 512.

The lower spray arm 550 may be rotatably disposed under the lower rack 541 and may spray the washing water to the dishes. The upper spray arm 560 may be rotatably disposed between the lower rack 541 and the upper rack 542, and may spray the washing water to the dishes.

The lower spray arm 550 may be rotatably mounted on the sump cover 532, and may spray the washing water toward the dishes accommodated in the lower rack 541. The upper spray arm 560 may be disposed on top of the lower spray arm 550 and may spray the washing water toward the dishes stored in the upper rack 542. The top nozzle 512 may be disposed at a top level of the washing space 511 and may spray the washing water to the lower rack 541 and the upper rack 542.

As described above, the first supply flow path 582 may supply the washing water to the lower spray arm 550, and the second supply flow path 583 may supply the washing water to the upper spray arm 560 and the top nozzle 512.

Referring to FIG. 5, the dishwasher 117 may include the base 570. The base 570 may be disposed under the tub 510, and the tub 510 may be mounted thereon. The base 570 may provide a space in which the sump is accommodated, and may provide a space in which various devices provided in the dishwasher 117 such as a pump are accommodated.

Accordingly, the base 570 may have an outer wall to support an entirety of the dishwasher 117. The outer wall may define the space in which the various devices are accommodated.

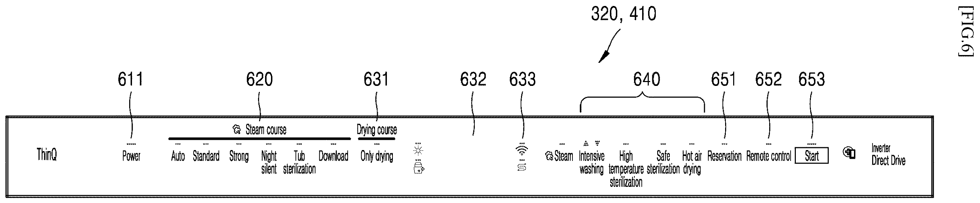

FIG. 6 is an example diagram illustrating a manipulation panel of a home appliance according to an embodiment of the disclosure.

Referring to FIG. 6, each of the manipulation panels 320 and 410 of the home appliance (e.g., the dishwasher 117) according to an embodiment of the present disclosure may be disposed on an upper portion of a front surface of the door 330 of the home appliance (e.g., the dishwasher 117) or may be disposed on the upper surface of the door 330.

According to an embodiment, in the home appliance (e.g., the dishwasher 117), the first manipulation panel 320 may be disposed on the upper portion of the front surface of the door 330, and the second manipulation panel 410 may be disposed on the upper surface of the door 330.

Alternatively, the home appliance (e.g., the dishwasher 117) may include the manipulation panel (e.g., the first manipulation panel 320) disposed only on the front surface of the door 330.

Alternatively, the home appliance (e.g., the dishwasher 117) may include the manipulation panel (e.g., the second manipulation panel 410) disposed only on the upper surface of the door 330.

The first manipulation panel 320 and the second manipulation panel 410 may display the same information or may receive the same command in a touch manner (or in a voice manner). Each of the first manipulation panel 320 and the second manipulation panel 410 may include a microphone (not shown) for sensing a voice signal.

For example, the first manipulation panel 320 disposed on the upper portion of the front surface of the door 330 may be maintained in an active state at all times.

On the other hand, the second manipulation panel 410 disposed on the upper surface of the door 330 may be activated in a state in which the door 330 is opened, and may be switched to an inactive state when the door 330 is closed.

The home appliance (e.g., the dishwasher 117) may include a sensor that detects the opening or closing of the door 330.

According to an embodiment, each of the manipulation panels 320 and 410 may include a touch sensor for sensing an input (e.g., a touch input) for controlling an operation of the home appliance (e.g., the dishwasher 117), and at least one light-emitting element indicating an operation state of the home appliance.

For example, each of the manipulation panels 320 and 410 may receive a command for controlling each of a power button 611, a steam course 620, a drying course 631, a timer 632, a communication setting 633, a cycle 640, a reservation 651, a remote-control 652, and an operation start 653. Each of the manipulation panels 320 and 410 may include the light-emitting elements respectively indicating control states thereof.

FIG. 7 is a configuration diagram of a dishwasher according to an embodiment of the disclosure.

Referring to FIG. 7, the dishwasher 117 according to an embodiment of the present disclosure may include the drainage device (e.g., the drainage motor 535), a memory 720, a door automatic opening module 730 including a driving motor 731, a sensor unit 740 including a first sensor 741 and a second sensor 742, a communicator 710, a hot air supply unit 760 including a blower motor 761, a heater 762, and a temperature sensor 763, and a washing water circulation unit 750 including a pump 751, a first nozzle 752, and a second nozzle 753, a speaker 770, the display 780 including the first manipulation panel 320 and the second manipulation panel 410, and a processor 790 for controlling overall operations of the dishwasher 117 and driving the timer 791.

A configuration of the dishwasher 117 illustrated in FIG. 7 is based on one embodiment, and the components of the dishwasher 117 are not limited to the embodiment illustrated in FIG. 7, and some components thereof may be added, changed, or deleted as necessary.

According to an embodiment, each of the first manipulation panel 320 and the second manipulation panel 410 may include the at least one light-emitting element and the touch sensor.

The dishwasher 117 (e.g., the processor 790) may turn on/off the light-emitting element in relation to the activation state of the remote-control mode (or output the light-emitting element in different colors based on the different remote-control modes) to notify the user whether the dishwasher 117 is in a remote-control mode available state, is set to the remote-control unavailable mode, to the remote-control one-time-available mode, or to the remote-control always-available mode.

For example, the dishwasher 117 (e.g., the processor 790) may turn on the light-emitting element when the remote-control mode is available, and may turn off the light-emitting element when the remote-control mode is not available.

For example, the dishwasher 117 (e.g., the processor 790) may allow the light-emitting element to emit green light when the remote-control mode is set to the remote-control one-time-available mode, and may allow the light-emitting element to emit blue light when the remote-control mode is set to the remote-control always-available mode.

The dishwasher 117 of the present disclosure may allow the light-emitting element to emit light in different colors including green and blue according to the different types of the remote-control mode.

According to an embodiment, the water supply pump 590 may supply the washing water into the dishwasher 117. The water supply pump 590 may include a water supply pipe 533 defining a water supply flow path through which water is supplied from an external water source to the water supply pump, and a water supply valve (not shown) for opening and closing the water supply flow path defined in the water supply pipe 533.

According to an embodiment, the memory 720 may store therein a control signal regarding an operation condition, a timing condition, etc. related to each of cycles of the dishwasher 117. In addition, the memory 720 may store therein a control signal for controlling an operation of each of the automatic door opening module 730, the display 780, the water supply pump 590, the sensor unit 740, the communicator 710, the pump 751, the speaker 770, the display 780, the hot air supply unit 760, etc.

In addition, the memory 720 may store therein instructions for preventing each of the components of the dishwasher 117 from operating in the remote-control mode, instructions for allowing each of the components of the dishwasher 117 to operate in the remote-control one-time-available mode, and instructions for allowing each of the components of the dishwasher 117 to operate in the remote-control always-available mode.

According to an embodiment, the memory 720 may store therein at least one instruction related to each of cycles (or operation processes) of the dishwasher 117. The memory 720 may store therein various programs for operating the dishwasher 117 based on each of these cycles (or operation processes).

According to an embodiment, the memory 720 may store therein information, data, programs, etc. necessary for the operation of the dishwasher 117. Specifically, information on the cycle (e.g., preliminary washing, main washing, rinsing, heating rinsing, hot air drying, etc.) of the dishwasher 117 may be pre-stored in the memory 720. The information may include information on an operation time according to each cycle. In addition, the information may include information on an operation order according to each cycle.

According to an embodiment, the drying process may include hot air drying for drying dishes by supplying hot air thereto, door open hot air drying for drying dishes by supplying the hot air thereto while the door is open, door open drying for drying dishes by opening the door, and condensation drying. In addition, the memory 720 stores therein information, data, and instructions necessary for the hot air drying, the door open hot air drying, the door open drying, and the condensation drying.

According to an embodiment, the memory 720 may store therein a program configured to execute instructions for controlling the operation of the dishwasher 117.

For example, the program may include instructions for starting a preliminary washing operation for washing dishes, based on an input for starting the cycle of the dishwasher 117, and instructions for deactivating a sensor (e.g., a touch sensor) for detecting an input for temporarily stopping the operation of the dishwasher 117 during the preliminary washing operation.

In addition, the program may include instructions for controlling on/off of the light-emitting element according to the remote-control deactivation or activation mode of the dishwasher 117, or allowing the light-emitting element to emit light of different colors based on the remote-control one-time-available mode, and the remote-control always-available mode of the dishwasher 117.

In addition, the program may include instructions for controlling on/off of the light-emitting element or allowing the light-emitting element to emit light of different colors based on the remote-control multiple-times (e.g., three times, 21 times, etc.) available mode and the remote-control predetermined time duration (e.g., three hours, 24 hours, etc.) available mode.

In addition, the program may include instructions for outputting different sounds through the speaker 770 based on different cycles of the dishwasher 117, a pause of the cycle, a start or restart of the cycle, a type of the remote-control mode, and an opening or closing of the door 330.

In addition, the program may include instructions for controlling the overall operations of the dishwasher.

According to an embodiment, upon receiving a control signal for opening the door 330 from the processor 790, the door automatic opening module 730 may be electrically driven to pivotably open the door 330.

To this end, the automatic door opening module 730 may include the driving motor 731 that generates a rotational driving force, a deceleration gear unit that decelerates the rotational driving force of the driving motor 731 and converts the rotational driving force into a linear reciprocation driving force, and a push rod that linearly reciprocates in a front-rear direction under the linear reciprocation driving force.

According to an embodiment, the sensor unit 740 may include the first sensor 741 and the second sensor 742 capable of detecting the opening or closing of the door 330. For example, each of the first sensor 741 and the second sensor 742 may be disposed on an area of the main body of the dishwasher 117 in contact with the upper surface of the door 330.

According to an embodiment, the sump 530 may drain water existing inside the dishwasher 117 to the outside. The sump 530 may include a drain pipe 534 having a drain flow path for guiding water stored in the storage 531 to the outside. In addition, the sump may include a drain pump disposed at the drain flow path formed in the drain pipe 534 to drain the washing water in the sump to the outside through the drainage motor 535.

According to an embodiment, the hot air supply unit 760 is electrically connected to the blower motor 761, the heater 762, and the temperature sensor 763. For example, when the door 330 is at least partially opened, the processor 790 may supply high-temperature hot air by simultaneously supplying power to the blower motor 761 and the heater 762, or may supply low-temperature dry air by cutting off power supply to the heater 762 and operating only the blower motor 761. The processor 790 may detect whether dry air of an appropriate temperature is supplied and whether overheating occurs in the process of supplying the high-temperature dry air based on an output signal of the temperature sensor 763.

According to an embodiment, the speaker 770 may output, as a voice or sound, an alarm regarding an operating state and an operating time of the dishwasher 117, and whether washing of the dishwasher 117 is completed. The alarm output through the speaker 770 may indicate that a temporary stop is possible during the cycle, detection of an input for the temporary stop, etc.

According to an embodiment, the speaker 770 may output different sounds based on different processes of the cycle, the pause of the cycle, the start or restart of the cycle, the type of the remote-control mode, and the opening or closing of the door 330.

In addition, the speaker 770 may output different sounds under the control of the processor 790 based on the setting and conversion of the remote-control mode to or maintenance of the remote-control unavailable mode, the remote-control one-time-available mode, or the remote-control always-available mode.

According to an embodiment, the display 780 may include the first manipulation panel 320 and/or the second manipulation panel 410.

For example, the first manipulation panel 320 may be disposed on the upper portion of the front surface of the door 330, and the second manipulation panel 410 may be disposed on the upper surface of the door 330.

For example, the first manipulation panel 320 may always be maintained in an active state. On the other hand, the second manipulation panel 410 may maintain an active state thereof when the door 330 is in an open state, whereas the second manipulation panel 410 may be switched to an inactive state when the door 330 is in a closed state.

Each of the first manipulation panel 320 and the second manipulation panel 410 may include at least one light-emitting element and a touch sensor for sensing a user's touch input.

According to an embodiment, each of the first manipulation panel 320 and the second manipulation panel 410 may display various information about the overall operation of the dishwasher 117.

According to an embodiment, the processor 790 may drive software to control at least one component connected to the processor 790 in a wired communication or wireless communication manner. The processor 790 may perform various data processing and operations based on the wired communication or the wireless communication.

According to an embodiment, the processor 790 may load and process a command or data received from the memory 720 onto the memory 720, and store the processed data into the memory 720. Alternatively, the processor 790 may display the processed data through the display 780.

The processor 790 may be embodied as at least one physical element among application specific integrated circuits (ASICs), digital signal processors (DSPs), digital signal processing devices (DSPDs), programmable logic devices (PLDs), field programmable gate arrays (FPGAs), processors, micro-controllers, and microprocessors.

According to an embodiment, the processor 790 may have an artificial intelligence algorithm embedded therein. Alternatively, the artificial intelligence algorithm may be implemented by the processor 790. The artificial intelligence is a program that mimics the human brain neural network, and may support a deep learning algorithm that analyzes, perceives, infers, and determines various data by itself.

According to an embodiment, when an input for starting the operation of the dishwasher 117 is detected, the processor 790 may start a preliminary washing operation for washing dishes present in the interior of the dishwasher 117. The preliminary washing operation may include a preliminary washing process for operating the dishwasher 117 and a process of heating washing water.

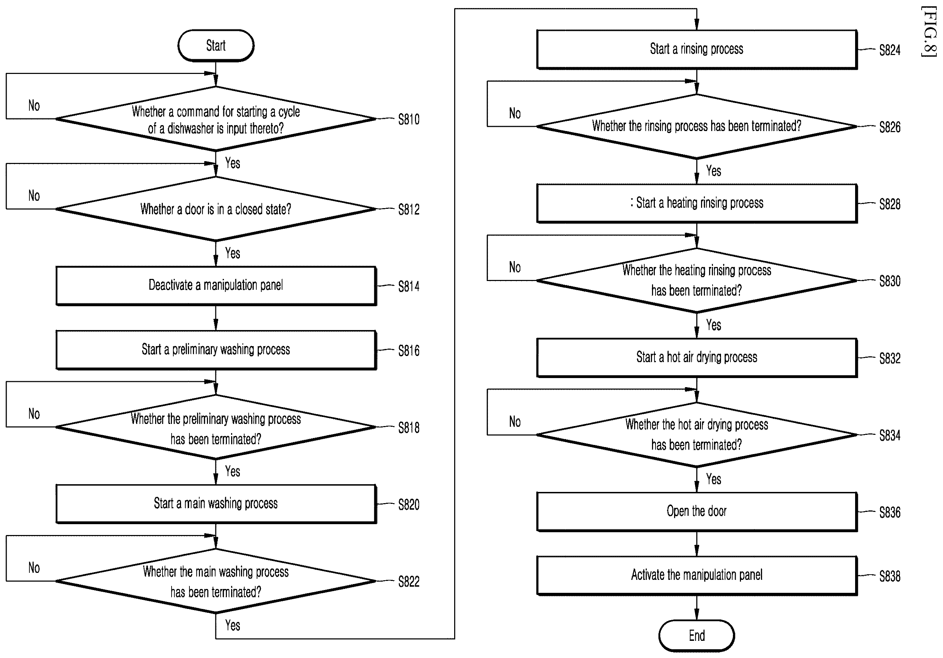

FIG. 8 is a flowchart illustrating a process of controlling activation/deactivation of a manipulation panel based on opening/closing of a door of a dishwasher according to an embodiment of the disclosure.

Hereinafter, referring to FIG. 8, a process of controlling the activation/deactivation of the manipulation panel based on the opening/closing of the door of the dishwasher according to an embodiment of the present disclosure will be described in detail as follows.

First, the dishwasher 117 according to an embodiment of the present disclosure may not only control the activation/deactivation of the manipulation panel based on the opening/closing of the door, but also control the activation/deactivation of the manipulation panel even when an event to be described later is detected/cleared.

In the present disclosure, the active or activated state refers to a state in which the manipulation panel may detect a command input from the user or a state in which the manipulation panel may operate based on a received control signal. In addition, the inactive or deactivated state refers to a state in which the manipulation panel does not receive the user's command or a state in which upon receiving the control signal, the manipulation panel does not operate.

In addition, in the dishwasher 117 according to an embodiment of the present disclosure, a function to which the remote-control one-time-available mode is applied and a function to which the remote-control always-available mode is applied may be the same as or different from each other.

According to an embodiment, the dishwasher 117 (e.g., the processor 790) may identify whether a command for starting a cycle of the dishwasher is input thereto in S810. The dishwasher 117 (e.g., the processor 790) may receive the command for starting the cycle of the dishwasher through the first manipulation panel 320 or the second manipulation panel 410.

For example, the dishwasher 117 (e.g., the processor 790) may detect that the power button 611 disposed on the first manipulation panel 320 is pressed or touched or the second manipulation panel 410 or the operation start 653 is pressed or touched. When the power button 611 is pressed or touched or the operation start 653 is pressed or touched, the dishwasher 117 (e.g., the processor 790) may determine that this input is related to the cycle of the dishwasher 117.

According to an embodiment, the dishwasher 117 (e.g., the processor 790) may identify whether the door is in a closed state in S812. The dishwasher 117 (e.g., the processor 790) may identify whether the door 330 is currently in a closed state or an open state through the first sensor 741 and/or the second sensor 742. The first sensor 741 and/or the second sensor 742 may detect the opening or closing of the door 330 and transmit the detection result to the processor 790.

As described above, the processor 790 may determine whether the door is currently in the open state or the closed state through the sensor (e.g., the first sensor 741 and the second sensor 742. To this end, the first sensor 741 and the second sensor 742 may be disposed at appropriate positions set for detecting the opening or closing of the door 330.

According to an embodiment, the dishwasher 117 (e.g., the processor 790) deactivates the manipulation panel in S814. When it is identified that the door is in the closed state, the dishwasher 117 (e.g., the processor 790) may switch the manipulation panel disposed on the upper surface or the front surface of the door 330 from the active state to the inactive state.

According to an embodiment, the dishwasher 117 (e.g., the processor 790) may start the preliminary washing process in S816. When the power button 611 is pressed or touched or the operation start 653 is pressed or touched, the dishwasher 117 (e.g., the processor 790) may first start a pre-processing operation. The pre-processing operation may include a process for operating the dishwasher 117 (e.g., activating the components, checking a remaining amount of detergent, supplying power to a main board, turning on the first manipulation panel 320, etc.).

When the pre-processing operation is completed, the dishwasher 117 (e.g., the processor 790) may start the preliminary washing process in S816. This preliminary washing is a process of spraying the washing water without detergent to remove large contaminants (e.g., food waste) from the dishes.

For example, the dishwasher 117 (e.g., the processor 790) may perform the preliminary washing process for a predetermined time duration (e.g., 8 minutes). In addition, the dishwasher 117 (e.g., the processor 790) may output a notification indicating that the preliminary washing operation has started through the speaker 770.

According to an embodiment, the dishwasher 117 (e.g., the processor 790) may identify whether the preliminary washing process has been terminated in S818. The dishwasher 117 (e.g., the processor 790) may terminate the preliminary washing process when a predetermined time duration (e.g., 8 minutes) has elapsed based on the timer 791 after the preliminary washing process is started. This predetermined time duration may be variably adjusted.

According to an embodiment, the dishwasher 117 (e.g., the processor 790) may start the main washing process in S820. This main washing process is a process of removing the contaminants from the dishes by spraying the washing water containing the detergent onto the dishes.

For example, the dishwasher 117 (e.g., the processor 790) may perform the main washing process for a predetermined time duration (e.g., 47 minutes). During this main washing process, the dishwasher 117 (e.g., the processor 790) heats the washing water for a predetermined time duration (e.g., 25 minutes) to increase the temperature of the washing water to a predetermined temperature (e.g., 55 degrees C). Thereafter, when the temperature of the washing water reaches the predetermined temperature (e.g., 55 degrees C), the dishwasher 117 (e.g., the processor 790) may stop the operation of heating the washing water. The above-described predetermined time duration and predetermined temperature may be variably adjusted according to the performance or model of the dishwasher.

According to an embodiment, the dishwasher 117 (e.g., the processor 790) may identify whether the main washing process has been terminated in S822. The dishwasher 117 (e.g., the processor 790) may terminate the main washing process upon determination that a predetermined time duration (e.g., 47 minutes) has elapsed using the timer 791 after the main washing process is started. This predetermined time duration may be variably adjusted.

According to an embodiment, the dishwasher 117 (e.g., the processor 790) may start a rinsing process in S824. The rinsing process is a process of removing the detergents from the dishes by spraying the washing water onto dishes.

For example, the dishwasher 117 (e.g., the processor 790) may perform the rinsing process for a predetermined time duration (e.g., 25 minutes). During this rinsing process, the dishwasher 117 (e.g., the processor 790) heats the washing water for a predetermined time duration (e.g., 8 minutes) to increase the temperature of the washing water to a predetermined temperature (e.g., 55 degrees C). Thereafter, when the temperature of the washing water reaches a predetermined temperature (e.g., 55 degrees C), the dishwasher 117 (e.g., the processor 790) may stop the operation of heating the washing water. The above-described predetermined time duration and predetermined temperature may be variably adjusted according to the performance or model of the dishwasher.

According to an embodiment, the dishwasher 117 (e.g., the processor 790) may identify whether the rinsing process has been terminated in S826. The dishwasher 117 (e.g., the processor 790) may terminate the rinsing process upon determination that a predetermined time duration (e.g., 47 minutes) has elapsed using the timer 791 after the rinsing process is started. This predetermined time duration may be variably adjusted.

According to an embodiment, the dishwasher 117 (e.g., the processor 790) may start the heating rinsing process in S828. The heating rinsing process is a process of removing detergent or the like from the dishes by spraying the heated washing water onto the dishes.

For example, the dishwasher 117 (e.g., the processor 790) may perform a heating rinsing process for a predetermined time duration (e.g., 18 minutes). During this heating rinsing process, the dishwasher 117 (e.g., the processor 790) heats the washing water for a predetermined time duration (e.g., 7 minutes) to increase the temperature of the washing water to a predetermined temperature (e.g., 55 degrees C). Thereafter, when the temperature of the washing water reaches a predetermined temperature (e.g., 55 degrees), the dishwasher 117 (e.g., the processor 790) may stop the operation of heating the washing water. The above-described predetermined time duration and predetermined temperature may be variably adjusted according to the performance or model of the dishwasher.

According to an embodiment, the dishwasher 117 (e.g., the processor 790) may identify whether the heating rinsing process has been terminated in S830. The dishwasher 117 (e.g., the processor 790) may terminate the heating rinsing process upon determination that a predetermined time duration (e.g., 18 minutes) has elapsed using the timer 791 after the heating rinsing process is started. This predetermined time duration may be variably adjusted.

According to an embodiment, the dishwasher 117 (e.g., the processor 790) may start the hot air drying process in S832. The hot air drying process is a process of removing washing water or the like from the dish by spraying the hot air onto the dishes.

For example, the dishwasher 117 (e.g., the processor 790) may operate the heater 762 and the blower motor 761 of the hot air supply unit 760 for a predetermined time duration (e.g., 60 minutes) to perform the hot air drying process.

According to an embodiment, the dishwasher 117 (e.g., the processor 790) may identify whether the hot air drying process has been terminated in S834. The dishwasher 117 (e.g., the processor 790) may terminate the hot air drying process upon determination that a predetermined time duration (e.g., 60 minutes) has elapsed using the timer 791 after the hot air drying process is started. This predetermined time duration may be variably adjusted

According to an embodiment, the dishwasher 117 (e.g., the processor 790) may open the door in S836. When the hot air drying process is completed, the dishwasher 117 (e.g., the processor 790) may control the automatic door opening module 730 to automatically open the door 330 to remove moisture inside the dishwasher 117.

According to an embodiment, the dishwasher 117 (e.g., the processor 790) may activate the manipulation panel in S838. When the door 330 is opened, the dishwasher 117 (e.g., the processor 790) may switch the manipulation panel 410 disposed on the upper surface of the door 330 from the inactive state to the active state.

As the dishwasher 117 (e.g., the processor 790) switches the manipulation panel disposed on the door 330 to the active state according to the opening of the door 330 as described above, the user may be provided with convenience in use for inputting a command through the manipulation panel.

In addition, the dishwasher 117 may receive a remote-control command through the display 780 or receive a control signal from the portable terminal 130 through the communicator 710 before, during, or after each of the above-described operations is performed.

When such a command or control signal is obtained, the processor 790 may set the remote-control mode of the dishwasher 117 based on the command or control signal.

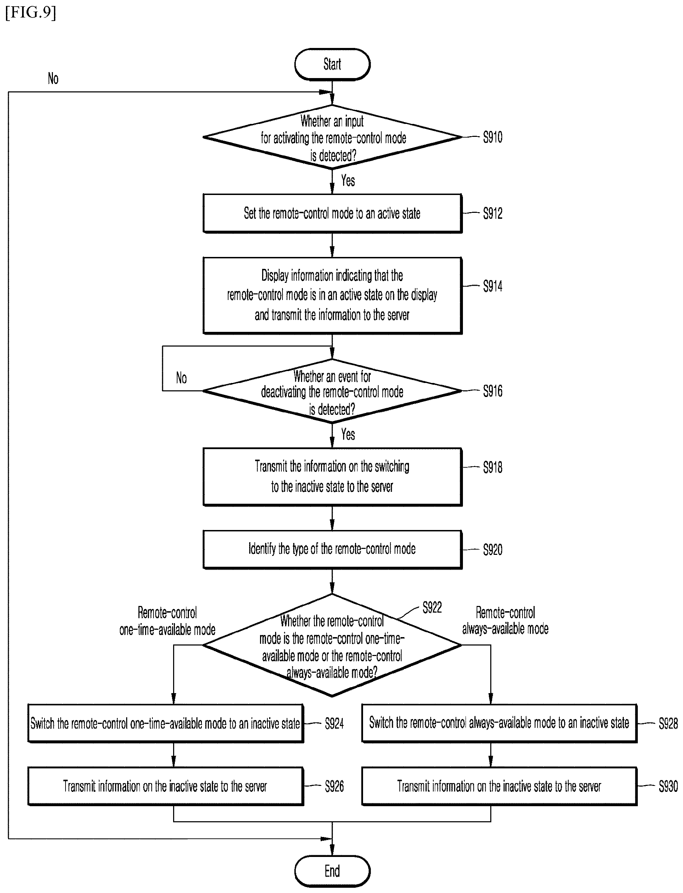

FIG. 9 is a flowchart illustrating an operation process of a home appliance according to an embodiment of the disclosure.

Hereinafter, an operation process of a home appliance according to an embodiment of the present disclosure will be described in detail with reference to FIG. 9.

According to an embodiment, the processor 790 may identify whether an input for activating the remote-control mode is detected in S910. The processor 790 may obtain a command for remotely controlling the dishwasher 117 through the first manipulation panel 320 and/or the second manipulation panel 410 of the display 780.

In addition, the processor 790 may identify whether the input allows the remote-control mode to be set to the remote-control one-time-available mode or the remote-control always-available mode.

For example, in a state in which the door 330 of the dishwasher 117 is closed, the user may input a command for activating the remote-control mode through the first manipulation panel 320.

For example, in a state in which the door 330 of the dishwasher 117 is opened, the user may input a command for activating the remote-control mode through the first manipulation panel 320 and/or the second manipulation panel 410.

According to an embodiment, the processor 790 may set the remote-control mode to an active state in S912. When the input of the command for remotely controlling the dishwasher 117 from the user through the first manipulation panel 320 and/or the second manipulation panel 410 is detected, the processor 790 may switch the operation mode so that the dishwasher 117 may be remotely controlled.

According to an embodiment, the processor 790 may display information indicating that the remote-control mode is in an active state on the display 780 and transmit the information to the server 120 in S914. The processor 790 may display information indicating that the remote-control mode is in an active state through the first manipulation panel 320 and/or the second manipulation panel 410. The processor 790 may transmit information indicating that the remote-control mode of the dishwasher 117 has been activated to the server 120 through the communicator 710.

For example, when the door 330 of the dishwasher 117 is in the closed state, the processor 790 may output information (e.g., LED light emission) indicating that the remote-control mode is activated through the first manipulation panel 320.

For example, when the door 330 of the dishwasher 117 is in the open state, the processor 790 may output information (e.g., LED light emission) indicating that the remote-control mode is activated through the first manipulation panel 320 and/or the second manipulation panel 410.

According to an embodiment, the processor 790 may identify whether an event for deactivating the remote-control mode is detected in S916. The processor 790 may identify whether an event for deactivating the set remote-control mode occurs while the dishwasher 117 is operating in the remote-control mode.

For example, the event may include detection of an opening of the door 330 of the dishwasher 117, detection of a key input onto the first manipulation panel 320 (or the second manipulation panel 410), completion of a cycle (e.g., preliminary washing, main washing, rinsing, heating rinsing, hot air drying, etc.) of the dishwasher 117, an error occurrence (e.g., a failure, abnormal operation, etc.), and/or an input regarding power on/off (ON/OFF) of the dishwasher 117.

In addition, when such an event is detected, the processor 790 may determine whether the remote-control mode detected in the process S910 is the remote-control one-time-available mode or the remote-control always-available mode.

When the event for deactivating the remote-control mode is detected through the first manipulation panel 320 and/or the second manipulation panel 410 in a state in which the remote-control mode of the dishwasher 117 is activated, the processor 790 may deactivate the remote-control mode of the dishwasher 117.

For example, when the remote-control mode is the remote-control one-time-available mode, the event (e.g., the first event) may include an input for switching the remote-control one-time-available mode to the remote-control unavailable mode or the remote-control always-available mode.

In addition, when the remote-control mode is the remote-control one-time-available mode, the event (e.g., the first event) may include detection of the opening of the door 330 of the dishwasher 117, the detection of the key input on the display 780, completion of a cycle (e.g., preliminary washing, main washing, rinsing, heating rinsing, hot air drying, etc.) of the dishwasher 117, an error occurrence (e.g., a failure, abnormal operation, etc.), and/or an input related to power on/off of the dishwasher 117.

When the occurrence of the event (e.g., the first event) is detected in the state in which the dishwasher 117 is set to the remote-control one-time-available mode as described above, the dishwasher 117 may switch the remote-control mode to the inactive state.

In addition, for example, when the remote-control mode is the remote-control always-available mode, the event (e.g., the second event) may include an input for switching the remote-control always-available mode selected through the display 780 of the dishwasher 117 to the remote-control unavailable mode or the remote-control one-time-available mode.

In addition, when the remote-control mode is the remote-control always-available mode, the event (e.g., the second event) may include an error occurrence of the dishwasher 117.

As described above, when the occurrence of the event (e.g., the second event) is detected while the dishwasher 117 is set to the remote-control always-available mode, the dishwasher 117 may switch the remote-control mode to the inactive state.

According to an embodiment, the processor 790 may switch the active state of the remote-control mode into the inactive state, and display the switching to the inactive state, and transmit the information on the switching to the inactive state to the server 120 through the communicator 710 in S918. The processor 790 may display information indicating that the remote-control mode is switched to the inactive state through the first manipulation panel 320 and/or the second manipulation panel 410.

For example, when the door 330 of the dishwasher 117 is in the closed state, the processor 790 may output information (e.g., LED light emission or sound output) indicating that the remote-control mode is switched to the inactive state through the first manipulation panel 320.

For example, when the door 330 of the dishwasher 117 is in the open state, the processor 790 may output information (e.g., LED light emission or sound output) indicating that the remote-control mode is deactivated through the first manipulation panel 320 and/or the second manipulation panel 410.

According to an embodiment, the processor 790 may identify the type of the remote-control mode in S920. The processor 790 may identify whether the remote-control mode input in the process S910 is the remote-control one-time-available mode or the remote-control always-available mode.

According to an embodiment, the processor 790 may identify whether the remote-control mode is the remote-control one-time-available mode or the remote-control always-available mode in S922. When the remote-control mode is the remote-control one-time-available mode, the processor 790 may determine whether the event corresponding to the remote-control one-time-available mode (e.g., switching to the remote-control unavailable mode, switching to the remote-control always-available mode, opening of the door 330, key input on the first manipulation panel 320, completion of various cycles of the dishwasher 117, occurrence of an error, and/or power on/off (ON/OFF)) occurs.

According to an embodiment, the processor 790 may switch the remote-control one-time-available mode to an inactive state in S924. When the remote-control mode is identified as the remote-control one-time-available mode, the processor 790 may switch the remote-control mode of the dishwasher 117 to an inactive state.

For example, when, in the process S916, the user input (e.g., switching to the remote-control unavailable mode, switching to the remote-control always-available mode, key input on the first manipulation panel 320, and/or power on/off (ON/OFF)) through the manipulation panel is detected, the processor 790 may switch the remote-control mode of the dishwasher 117 to an inactive state.

For example, when the operation of the dishwasher 117 (e.g., the cycle of the dishwasher 117) is performed, the processor 790 may switch the remote-control mode of the dishwasher 117 to the inactive state.

For example, when an error occurs in the dishwasher 117 or the closing of the door 330 is detected, the processor 790 may switch the remote-control mode of the dishwasher 117 to an inactive state.

As described above, in the home appliance according to the disclosure, various events may occur or be cleared based on the type, model, and/or performance, and the activation/deactivation of the remote-control mode may be controlled according to the detection or clearance of the various types of events.

According to an embodiment, the processor 790 may transmit information on the inactive state to the server 120 in S926. In a state in which the remote-control mode of the dishwasher 117 has been switched to the inactive state, the processor 790 may transmit information indicating that the remote-control mode of the dishwasher 117 has been switched to the inactive state to the server 120 through the communicator 710.

Such information may include instructions and/or information necessary to indicate that the remote-control mode of the dishwasher 117 is currently in the inactive state on the application of the portable terminal 130.

According to an embodiment, the processor 790 may switch the remote-control always-available mode to an inactive state in S928. When the remote-control mode is identified as the remote-control always-available mode, the processor 790 may switch the remote-control mode of the home appliance (e.g., the dishwasher 1170) to an inactive state.

For example, when a user input (e.g., switching to the remote-control unavailable mode, switching to the remote-control always-available mode) through the manipulation panel is detected in the process S916, the processor 790 may switch the remote-control mode of the dishwasher 117 to the inactive state.

For example, when an error occurs in the dishwasher 117, the processor 790 may switch the remote-control mode of the dishwasher 117 to an inactive state.

As described above, in the home appliance according to the disclosure, various events may occur or be cleared according to the type, model, and/or performance, and the activation/deactivation of the remote-control mode may be controlled according to the detection or clearance of the various types of events.

According to an embodiment, the processor 790 may transmit information on the inactive state transition to the server in S930. In a state in which the remote-control always-available mode of the dishwasher 117 has been switched to the inactive state, the processor 790 may transmit, to the server 120 through the communicator 710, information indicating that the remote-control always-available mode of the dishwasher 117 has been currently switched to the inactive state.

Such information may include instructions and/or information necessary to indicate that the remote-control always-available mode of the dishwasher 117 has been currently switched to the inactive state on the application of the portable terminal 130.

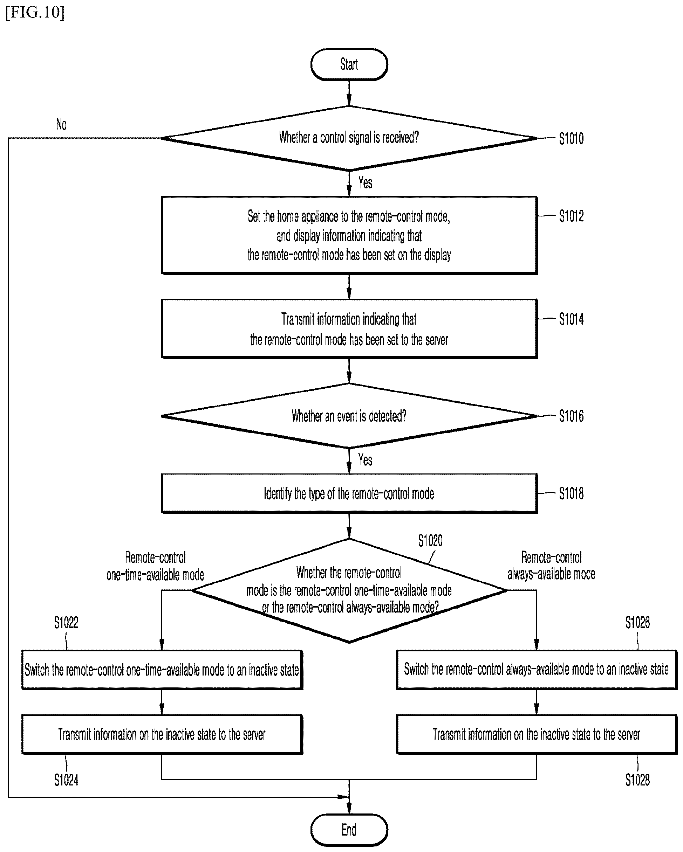

FIG. 10 is a flowchart illustrating an operation process of a home appliance according to another embodiment of the disclosure.

Hereinafter, an operation process of a home appliance according to another embodiment of the present disclosure will be described in detail with reference to FIG. 10.

According to an embodiment, the processor 790 may identify whether a control signal is received in S1010. The processor 790 (e.g., the communicator 710) may receive the control signal (e.g., the control signal instructing switching the remote-control mode of the dishwasher 117 to the remote-control one-time-available mode or the always-remote-control available mode) transmitted from the server 120 through the router 111. The control signal is a signal transmitted from the portable terminal 130.

The processor 790 may analyze the control signal and may determine whether the control signal allows the remote-control mode of the dishwasher 117 to be switched to the remote-control one-time-available mode or the remote-control always-available mode, based on the analysis result.

According to an embodiment, the processor 790 may set the dishwasher 117 to the remote-control mode, and display information indicating that the remote-control mode has been set on the display 780 in S1012. After setting the dishwasher 117 to the remote-control mode based on the received control signal, the processor 790 may display information indicating that the dishwasher 117 has been set to the remote-control mode on the display 780 (e.g., the first manipulation panel 320).

According to an embodiment, the processor 790 may transmit information indicating that the remote-control mode has been set to the server 120 in S1014. After displaying information indicating that the remote-control mode is in the active state, the processor 790 may transmit information indicating that the remote-control mode of the dishwasher 117 has been activated to the server 120 through the communicator 710.

According to an embodiment, the processor 790 may identify whether an event is detected in S1016. The processor 790 may identify whether an event for deactivating the set remote-control mode occurs while the dishwasher 117 is set to the remote-control mode.

According to an embodiment, the processor 790 may identify the type of the remote-control mode in S1018. The processor 790 may determine whether the remote-control mode is the remote-control one-time-available mode or the remote-control always-available mode based on the analysis of the control signal received in the process S1012.

According to an embodiment, the processor 790 may identify whether the identified remote-control mode is the remote-control one-time-available mode or the remote-control always-available mode in S1020. The processor 790 may determine whether an event corresponding to the remote-control one-time-available mode (e.g., switching to the remote-control unavailable mode, switching to the remote-control always-available mode, opening of the door 330, key input on the first manipulation panel 320, completion of various cycles of the dishwasher 117, occurrence of an error, and/or power on/off (ON/OFF)) occurs in the state in which the dishwasher 117 is set to the remote-control one-time-available mode.

According to an embodiment, the processor 790 may switch the remote-control one-time-available mode to an inactive state in S1022. When the remote-control mode is identified as the remote-control one-time-available mode, the processor 790 may switch the remote-control mode of the dishwasher 117 to an inactive state.

For example, in response to that, in the process S1016, the user input (e.g., switching to the remote-control unavailable mode, switching to the remote-control always-available mode, key input on the first manipulation panel 320, and/or power on/off) through the manipulation panel is detected, the processor 790 may switch the remote-control mode of the dishwasher 117 to the inactive state.

For example, when the operation of the dishwasher 117 (e.g., the cycle of the dishwasher 117) is performed, the processor 790 may switch the remote-control mode of the dishwasher 117 to the inactive state.

For example, when an error occurs in the dishwasher 117 or the closing of the door 330 is detected, the processor 790 may switch the remote-control mode of the dishwasher 117 to an inactive state.

As described above, in the home appliance according to the disclosure, various events may occur or be cleared according to the type, model, and/or performance, and the activation/deactivation of the remote-control mode may be controlled according to the detection or clearance of the various types of events.

According to an embodiment, the processor 790 may transmit information on the inactive state to the server 120 in S1024. The processor 790 may transmit information indicating that the dishwasher 117 is currently in an inactive state to the server 120 through the communicator 710 while maintaining the remote-control mode of the dishwasher 117 in the inactive state.

Such information may include instructions and/or information necessary to indicate that the dishwasher 117 is currently in the inactive state on the application of the portable terminal 130.

According to an embodiment, the processor 790 may switch the remote-control always-available mode to an inactive state in S1026. When the remote-control mode is identified as the remote-control always-available mode, the processor 790 may switch the remote-control always-available mode of the dishwasher 117 to an inactive state.

For example, when a user input (e.g., switching to the remote-control unavailable mode, switching to the remote-control always-available mode) through the manipulation panel is detected in the process S1016, the processor 790 may switch the remote-control mode of the dishwasher 117 to the inactive state.

For example, when an error occurs in the dishwasher 117, the processor 790 may switch the remote-control mode of the dishwasher 117 to an inactive state.

As described above, in the home appliance according to the disclosure, various events may occur or be cleared according to the type, model, and/or performance, and the activation/deactivation of the remote-control mode may be controlled according to the detection or clearance of the various types of events.

According to an embodiment, the processor 790 may transmit information on the inactive state transition to the server in S1028. The processor 790 may transmit information indicating that the remote-control always-available mode of the dishwasher 117 has been switched to the inactive state to the server 120 through the communicator 710.

Such information may include instructions and/or information necessary to indicate that the remote-control always-available mode of the dishwasher 117 has been switched to the currently inactive state on the application of the portable terminal 130.

As described above, the dishwasher 117 according to the present disclosure may actively control the activation/deactivation of the remote-control mode using the processor 790. Alternatively, the activation/deactivation of the remote-control mode may be manually controlled under the control of the server 120.

FIG. 11 is a block diagram of a portable terminal according to an embodiment of the disclosure.

Referring to FIG. 11, the portable terminal 130 according to an embodiment of the present disclosure may include a camera 1110, a display 1120, a memory 1130, a communicator 1140, and a processor 1150.

The configuration of the portable terminal 130 illustrated in FIG. 11 is merely based on one embodiment, and the components of the portable terminal 130 are not limited to the embodiment illustrated in FIG. 11, and some components may be added, changed, or deleted as necessary.

According to an embodiment, the camera 1110 may be disposed at a front surface and/or a rear surface of the portable terminal 130 to acquire at least one image of a user who wants to remotely control the home appliances 110, and transmit the acquired image to the processor 1150.

According to an embodiment, the display 1120 may display information on various operations performed by the portable terminal 130.

For example, the display 1120 may display an application for remotely controlling at least one home appliance under the control of the processor 1150.

The display 1120 may display various information on the operation of the home appliances 110 (e.g., a completed operation, an operation currently in progress, an operation to be performed, a time when the operation is terminated, an operation state, a function, etc.) on the application.

The application may provide various functions capable of upgrading software of the at least one home appliance. In addition, the application may provide communication with the server 120 as well as the home appliance.

According to an embodiment, the memory 1130 may include a volatile memory or a non-volatile memory. In addition, the memory 1130 may store therein information, data, programs, applications, etc. necessary for the operation of the home appliances 110. For example, the processor 1150 may execute an application 1151 (e.g., the LG^{™} ThinQ application) stored in the memory 1130 and remotely control (or set, change a mode, etc.) an operation of the at least one home appliance through the executed application.

For example, the application 1511 (e.g., the LG^{™} ThinQ application) may additionally install a program received from the server in the application, upon receiving a request of a function of the at least one home appliance (e.g., a request of downloading a program for remotely controlling the home appliance).

In addition, the application may include instructions for requesting a channel connection to the server 120. The application may include instructions for connecting the channel to the server 120 upon receiving an approval of the channel connection from the server 120 in response to the request.

In addition, the application may include instructions for obtaining information on the home appliance through the channel and for transmitting the obtained information on the home appliance to the server through the channel.

According to an embodiment, the communicator 1140 may perform wired communication or wireless communication with the server 120. The communicator 1140 may include at least one circuit capable of transmitting and receiving at least one signal or information to and from the router 111 and the server 120 through the network 140. The communicator 1140 may transmit and receive various information or data related to remote-control of the server 120 and the home appliances 110 through the circuit.

In addition, the communicator 1140 may communicate with the router 111 in the home based on short-range communication (e.g., Bluetooth, Wi-Fi, NFC, or beacon).

According to an embodiment, the processor 1150 may have an artificial intelligence algorithm embedded therein. Alternatively, the artificial intelligence algorithm may be implemented by the processor 1150. The artificial intelligence is a program that mimics the human brain neural network, and may support a deep learning algorithm that analyzes, perceives, infers, and determines various data by itself.

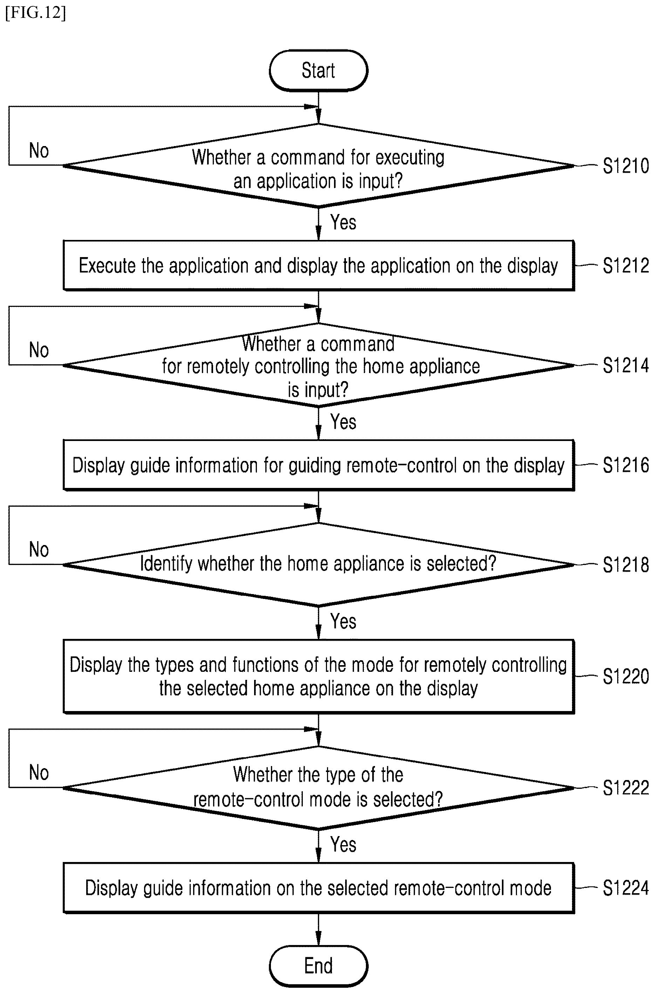

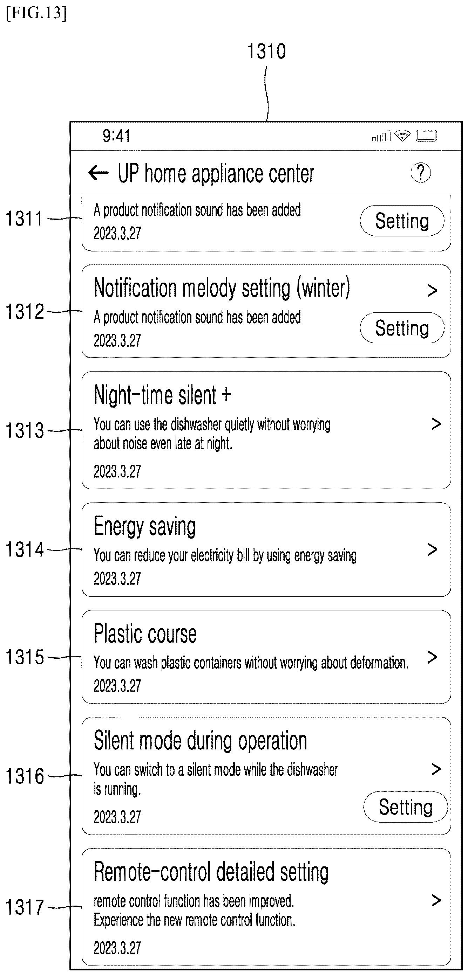

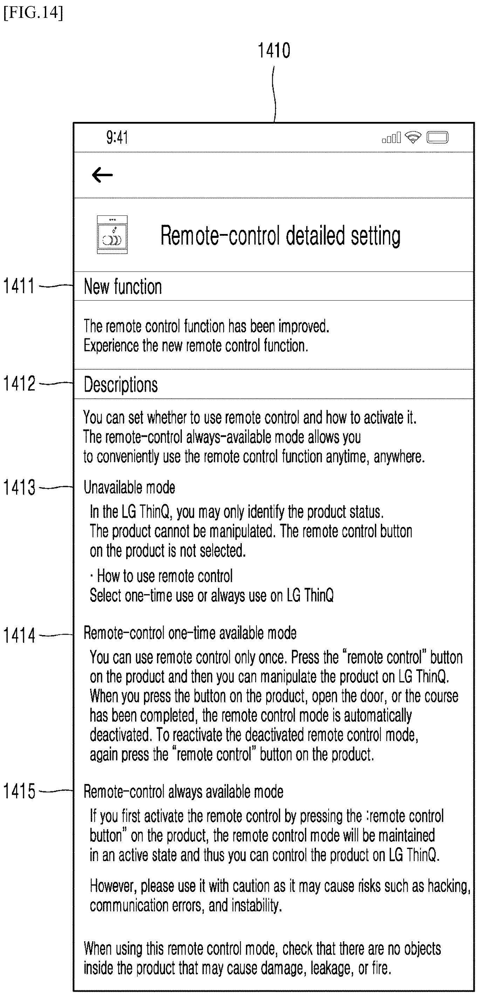

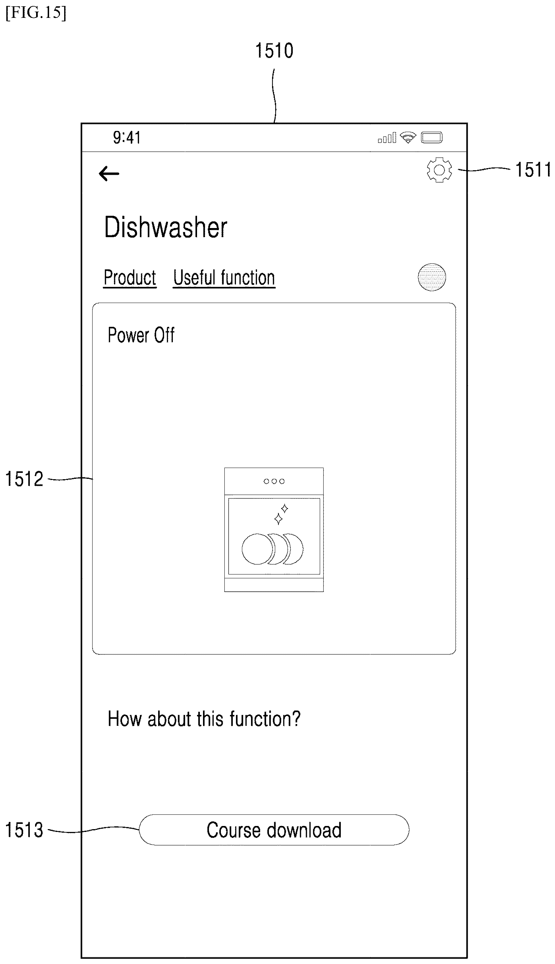

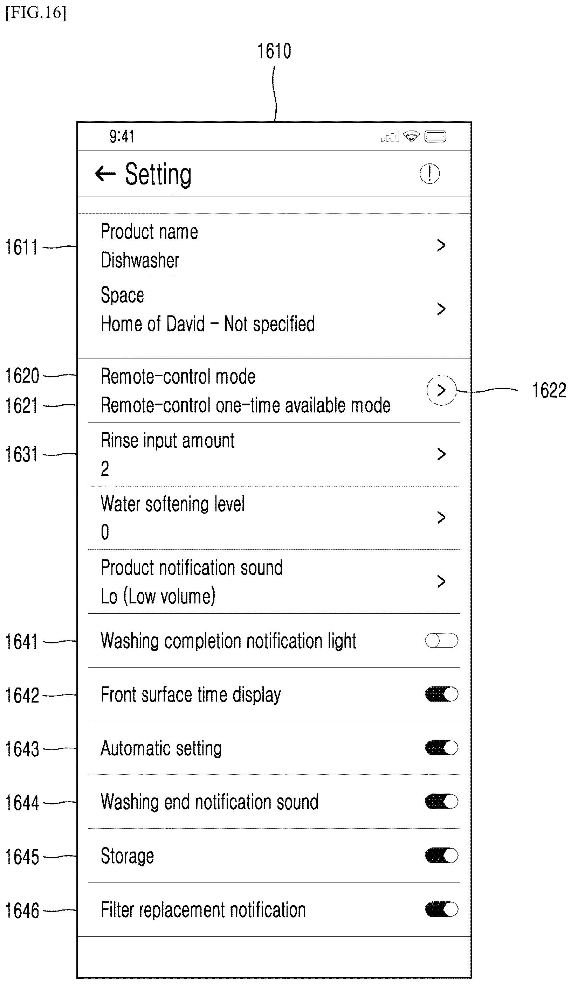

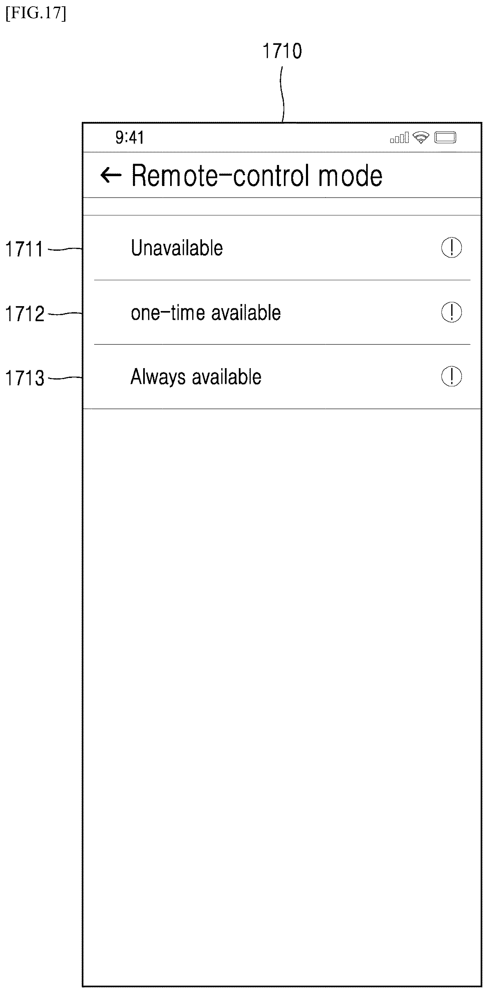

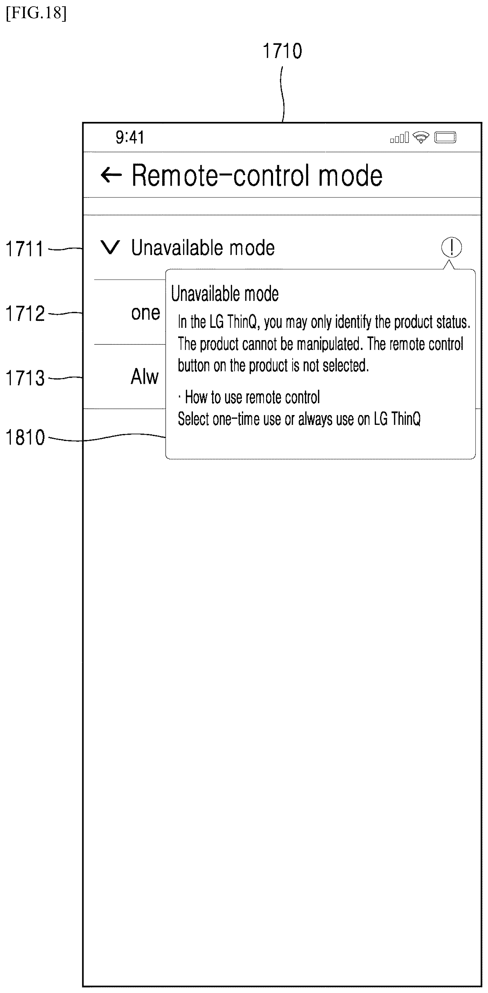

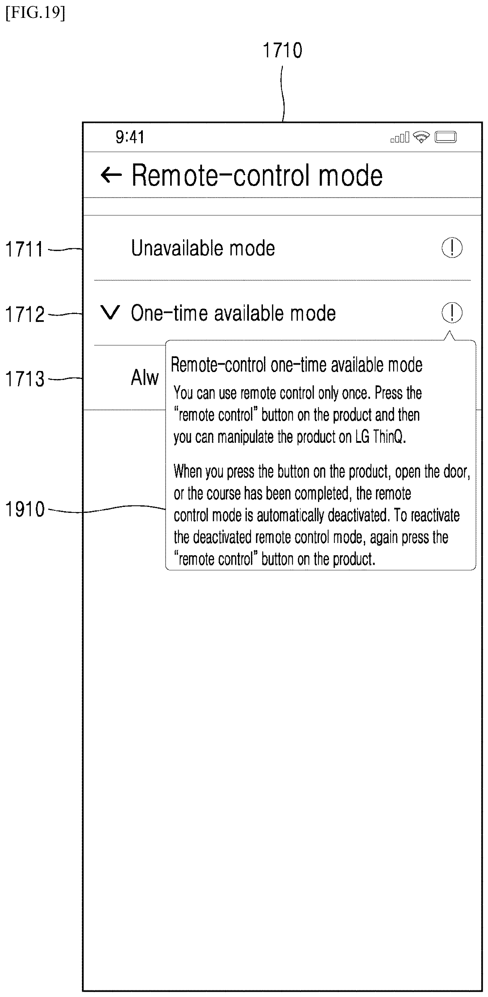

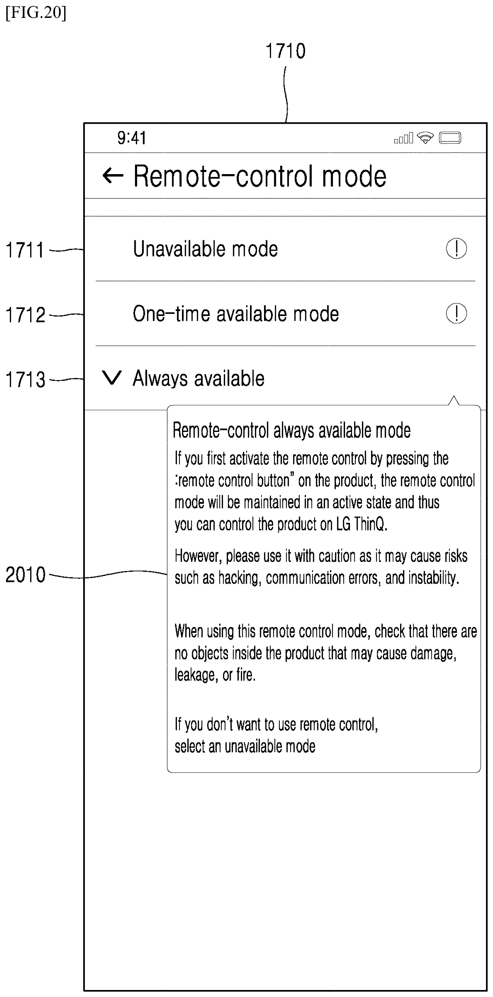

FIG. 12 is a flowchart illustrating a process of displaying information for remotely controlling a home appliance through a portable terminal according to an embodiment of the disclosure. FIG. 13 is an example diagram illustrating a screen including a menu for remote-control setting on an application according to an embodiment of the disclosure. FIG. 14 is an example diagram illustrating a screen for guiding a detailed setting on remote-control on an application according to an embodiment of the disclosure. FIG. 15 is an example diagram illustrating a home screen of a dishwasher on an application according to an embodiment of the disclosure. FIG. 16 is an example diagram illustrating a screen for receiving various settings related to remote-control on an application according to an embodiment of the disclosure. FIG. 17 is a screen illustrating a type of a remote-control mode according to an embodiment of the disclosure. FIG. 18 is a screen displaying guide information on a remote-control unavailable mode in which a remote-control mode is unavailable according to an embodiment of the disclosure. FIG. 19 is a screen displaying guide information on a remote-control one-time-available mode in which a remote-control mode is used once according to an embodiment of the disclosure. FIG. 20 is a screen displaying guide information on a remote-control always-available mode in which a remote-control mode is always used according to an embodiment of the disclosure.

Hereinafter, a process of displaying information for remotely controlling a home appliance through a portable terminal according to an embodiment of the present disclosure will be described in detail with reference to FIGS. 11 to 20.

According to an embodiment, the processor 1150 may identify whether a command for executing an application is input in S1210. The processor 1150 may identify whether an icon of an application (e.g., an LG^{™} ThinQ application) displayed on the display 1120 is touched.

According to an embodiment, the processor 1150 may execute the application and display the application on the display 1120 in S1212. When the icon of the application (e.g., an LG^{™} ThinQ application) displayed on the display 1120 has been touched, the processor 150 may read instructions (e.g., codes) of the application stored in the memory 1130, and then may execute and display the application on the display 1120.

According to an embodiment, the processor 1150 may identify whether a command for remotely controlling the home appliance is input in S1214. The processor 1150 may identify whether a setting menu to remotely control the home appliance (e.g., the dishwasher 117) is selected through the application displayed on the display 1120.

Referring to FIG. 13, the processor 1150 may display a screen 1310 including the setting menu to remotely control the home appliance (e.g., the dishwasher 117) through the application. The processor 1150 may receive upgrade information on functions of at least one home appliance from the server 120 periodically (or when an upgrade occurs), and then add the upgrade information to the application.

For example, the screen 1310 may include a notification menu 1311 of the home appliance, a melody menu 1312 for a notification, a night-time silent menu 1313 for allowing the home appliance to operate at low noise at night, a menu 1314 for operating the home appliance at low power, a function menu (e.g., a plastic course 1315) of the home appliance (e.g., the dishwasher 117), a silent mode 1316, and a setting menu 1317 for remotely controlling the home appliance.

In addition, the screen 1310 may include other functions or menus according to the type or model of the home appliance in addition to the various functions or menus described above.

According to an embodiment, the processor 1150 may display guide information for guiding remote-control on the display 1120 in S1216. The processor 1150 may display guide information for notifying the user of remote-control on the application.

In addition, the processor 1150 may display, on the application, a list of at least one home appliance that can be remotely controlled among a plurality of home appliances in the home. The information on the list of at least one home appliance that can be remotely controlled may be received from the server 120, so that the portable terminal 130 may determine at least one home appliance that is remotely controllable among the plurality of home appliances in the home, based on the received information.

Referring to FIG. 14, when the setting menu 1317 for remotely controlling a home appliance is selected in FIG. 13, the processor 1150 may display a screen 1410 including detailed information on the remote-control mode through the application.

For example, the screen 1410 may include information 1411 about a remote-control function, a description 1412 about the remote-control function, information 1413 about the remote-control disable or unavailable mode in which the remote control is not used, information 1414 about the remote-control one-time-available mode in which the remote-control mode is used one time, and information 1415 about the remote-control always-available mode in which the remote-control mode is used all the times.

In addition, the screen 1410 may include other information according to the type or model of the home appliance in addition to the various information as described above.

According to an embodiment, the processor 1150 may identify whether the home appliance is selected in S1218. The processor 1150 may determine a home appliance selected by the user from a list of at least one home appliance which can be remotely controlled as displayed on the application.

The processor 1150 may display the list of at least one home appliance that can be remotely controlled on the application, and the user may select a home appliance which the user wants to remotely control.

Referring to FIG. 15, when the user selects the home appliance (e.g., the dishwasher 117), the processor 1150 may display a screen 1510 related to the selected home appliance (e.g., the dishwasher 117).

For example, the screen 1510 may include a setting button 1511 on the selected home appliance (e.g., the dishwasher 117), an image 1512 of the selected home appliance (e.g., the dishwasher 117), and a menu 1513 for downloading a course of the selected home appliance (e.g., the dishwasher 117).

In addition, the screen 1510 may include other information according to the type or model of the home appliance (e.g., the dishwasher 117) in addition to the above-described various information.

According to an embodiment, the processor 1150 may display the types and functions of the mode for remotely controlling the selected home appliance on the display 1120 in S1220. The processor 1150 may display, on the application, the type of the remote-control mode (e.g., the remote-control one-time-available mode or the remote-control always-available mode) for the home appliance selected by the user from the list of at least one home appliance which can be remotely controlled as displayed on the application, and various functions of the selected home appliance which can be remotely controlled.

For example, the functions of the home appliance that can be remotely controlled vary depending on the type and model of the home appliance.

The portable terminal 130 periodically communicates with the server 120 (e.g., the LG^{™} ThinQ server) and receives information about the home appliances, and thus determines whether each home appliance is remotely controllable or not.

Referring to FIG. 16, when the setting button 1511 on the screen 1510 of FIG. 15 is selected, the processor may display a screen 1610 including various functions for setting the home appliance (e.g., the dishwasher 117) on the application.

For example, the screen 1610 may include a name 1611 of the selected home appliance (e.g., the dishwasher 117), a menu 1620 for selecting a type of the remote-control mode, a selected (or current) remote-control mode 1621, an indicator 1622 for changing the remote-control mode, a rinse input amount 1631, a washing completion notification light 1641, a front surface time display 1642, an automatic setting 1643, a washing end notification sound 1644, a storage 1645, a filter replacement notification 1646, etc.

The screen 1610 may include a list of various functions of the selected home appliance (e.g., the dishwasher 117) which can be remotely controlled, and the type of the remote-control mode of the selected home appliance (e.g., the dishwasher 117).

According to an embodiment, the processor 1150 may identify whether the type of the remote-control mode is selected in S1222. The processor 1150 may identify the user's selection of whether to remotely control the selected home appliance once or always.

Referring to FIG. 17, when the user selects the indicator 1622 to change the remote-control mode in FIG. 16, the processor 1150 may display a screen 1710 including the types of the remote-control mode of the selected home appliance (e.g., the dishwasher 117) through the application.

The screen 1710 may include information on a remote-control disable mode (e.g., a remote-control unavailable mode) 1711 for preventing the selected home appliance (e.g., the dishwasher 117) from being remotely controlled, an one-time use (e.g., the remote-control one-time-available mode) 1712 of the selected home appliance (e.g., the dishwasher 117) in the remote-control mode, and an always use (e.g., the remote-control always-available mode) 1713 of the selected home appliance (e.g., the dishwasher 117) in the remote-control mode.

According to an embodiment, the processor 1150 may display guide information on the selected remote-control mode in S1224. The processor 1150 may display guide information regarding the selected type of the remote-control mode to be notified to the user on the application.

Referring to FIG. 18, when the user selects the remote-control disable (e.g., the remote-control unavailable mode) 1711 on the screen 1710 of FIG. 17, the processor 1150 may display a pop-up 1810 including guide information on the remote-control disable on the screen 1710 of FIG. 17.

The pop-up 1810 may include guide information indicating that the home appliance cannot be remotely controlled through the application of the portable terminal 130. Further, the pop-up 1810 may include guide information for guiding the user to remotely control the home appliance when the user wants to remotely control the home appliance.

Referring to FIG. 19, when the user selects the one-time use 1712 of the remote-control of the selected home appliance (e.g., the dishwasher 117) (e.g., selects the remote-control one-time-available mode) on the screen 1710 of FIG. 17, the processor 1150 may display a pop-up 1910 including guide information indicating that the selected home appliance can be remotely controlled once on the screen 1710 of FIG. 17.

The pop-up 1910 may include guide information indicating that the home appliance can be remotely controlled once and guide information for guiding the remote-control through the application of the portable terminal 130

Referring to FIG. 20, when the user selects the always use 1713 of the remote control of the selected home appliance (e.g., the dishwasher 117) (that is, selects the remote-control always-available mode) on the screen 1710 of FIG. 17, the processor 1150 may display, on the screen 1710 of FIG. 17, a pop-up 2010 including guide information on that the selected home appliance can be remotely controlled always.

The pop-up 2010 may include guide information indicating that the home appliance can be remotely controlled at all times, and guide information for guiding remote-control through the application of the portable terminal 130.

As described above, the various information displayed on the application in accordance with the present disclosure may be information stored in the memory 1130 or may be information received by the processor 1150 from the server 120 after the processor 1150 requests the information, in real time, toward the server 120 based on the user's menu selection.

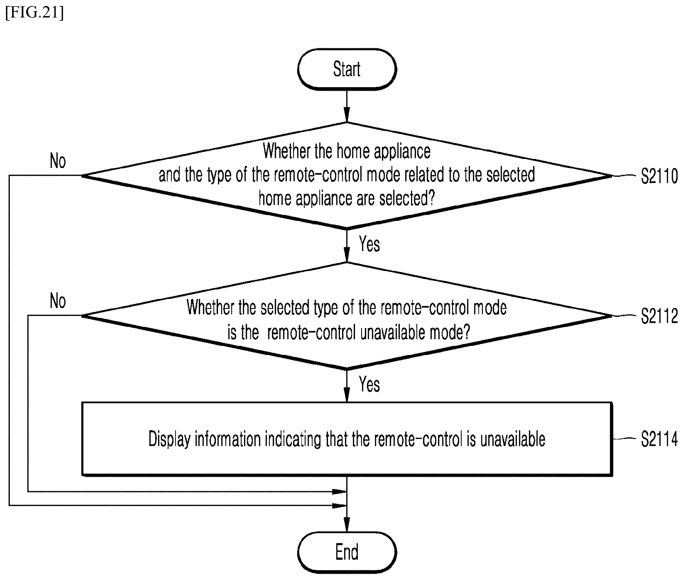

FIG. 21 is a flowchart illustrating a process in which a portable terminal displays a message indicating a state in which the remote-control mode of a home appliance is set to a remote-control unavailable mode according to an embodiment of the disclosure. (a) in FIG. 22 is a screen illustrating a state in which the dishwasher according to an embodiment of the present disclosure sets the remote-control mode to the remote-control unavailable mode. (b) in FIG. 22 is a screen illustrating a state in which the dishwasher is currently operating according to an embodiment of the disclosure.

Hereinafter, referring to FIG. 21, and (a) and (b) in FIG. 22, a process in which a portable terminal displays a message indicating a state in which the remote-control mode of a home appliance is set to a remote-control unavailable mode according to an embodiment of the present disclosure will be described in detail as follows.

According to an embodiment, the processor 1150 may identify whether the home appliance and the type of the remote-control mode related to the selected home appliance are selected on the application in S2110. The processor 1150 may identify the user's selection of the home appliance from among the list of at least one home appliance which can be remotely controlled as displayed on the application and may identify the user's selection about whether to remotely control the selected home appliance one time or always.

According to an embodiment, the processor 1150 may identify whether the selected type of the remote-control mode is the remote-control unavailable mode in S2112. When the selected type of the remote-control mode is the remote-control unavailable mode, the processor 1150 may transmit information indicating that the selected type of the remote-control mode is the remote-control unavailable mode to the server 120 through the communicator 1140.

According to an embodiment, the processor 1150 may display information indicating that the remote-control is unavailable on the application in S2114. When the selected type of the remote-control mode is the remote-control unavailable mode, the processor 1150 may display information indicating a state in which the home appliance selected by the user is currently operating on the application.

In addition, the processor 1150 may display information indicating that the home appliance selected by the user is not remotely controllable on the application.

Referring to (a) and (b) of FIG. 22, the processor 1150 may display a screen 2210 including various functions for setting the selected home appliance (e.g., the dishwasher 117) on the application.

For example, the screen 2210 may include information 2211 indicating that the selected home appliance (e.g., the dishwasher 117) does not use the remote-control mode.

In addition, the processor 1150 may display a screen 2220 indicating operation information on the selected home appliance (e.g., the dishwasher 117) through the application.

For example, the screen 2220 may include information 2230 indicating a state in which the selected home appliance (e.g., the dishwasher 117) is currently operating, and functions (e.g., hot air drying 2241 and reservation 2242) that the selected home appliance (e.g., the dishwasher 117) can remotely control.

FIG. 23 is a flowchart illustrating an operation process in which a portable terminal operates when a remote-control mode of a home appliance is a remote-control one-time-available mode according to an embodiment of the disclosure. (a) in FIG. 24A is a screen illustrating a state in which the dishwasher according to an embodiment of the present disclosure sets the remote-control mode to the remote-control one-time-available mode. (b) in FIG. 24A is a screen illustrating a state in which the dishwasher according to an embodiment of the present disclosure sets the remote-control mode to the remote-control always-available mode. (c) in FIG. 24B is a screen illustrating a state in which power of the dishwasher according to an embodiment of the present disclosure is turned off. (d) in FIG. 24B is a screen illustrating a process of turning on power of the dishwasher according to an embodiment of the disclosure. (a) FIG. 25 is a screen illustrating a state in which an event occurs in the dishwasher according to an embodiment of the disclosure. (b) in FIG. 25 is a screen illustrating a process of turning off power of the dishwasher according to an embodiment of the disclosure. (c) in FIG. 25 is a screen showing a guide message when the power of the dishwasher is turned off according to an embodiment of the disclosure. (a) in FIG. 26A is a screen illustrating a state in which remote-control on a steam cycle of the dishwasher is turned off according to an embodiment of the disclosure. (b) in FIG. 26A is a screen illustrating a state in which an event occurs in a state in which remote-control on a steam cycle of a dishwasher is turned on according to an embodiment of the disclosure. (c) in FIG. 26B is a screen illustrating a state in which an event has been terminated in a state in which remote-control on a steam cycle of a dishwasher is turned on according to an embodiment of the disclosure. (d) in FIG. 26B is a screen showing a state after an event has been terminated in a state in which remote-control on a steam cycle of a dishwasher is turned on according to an embodiment of the disclosure.

Hereinafter, referring to FIG. 23 to (d) in FIG. 26B, an operation process of the portable terminal when the remote-control mode of the home appliance is the remote-control one-time-available mode according to an embodiment of the present disclosure will be described in detail as follows.

According to an embodiment, the processor 1150 may identify whether the home appliance and the type of the remote-control mode thereof are selected in S2310. The processor 1150 may identify the home appliance selected by the user from among the list of at least one home appliance which can be remotely controlled as displayed on the application, and may also identify whether to remotely control the selected home appliance or not or whether to remotely control the selected home appliance once or always.

According to an embodiment, the processor 1150 may identify whether the selected type of the remote-control mode is the remote-control one-time-available mode or the remote-control always-available mode in S2312. When the selected type of the remote-control mode is the remote-control one-time-available mode, the processor 1150 may transmit information indicating that the selected type of the remote-control mode is the remote-control one-time-available mode to the server 120 through the communicator 1140.

Alternatively, when the selected type of the remote-control mode is the remote-control always-available mode, the processor 1150 may transmit information indicating that the selected type of the remote-control mode is the remote-control always-available mode to the server 120 through the communicator 1140.

According to an embodiment, the processor 1150 may display functions of the selected home appliance to which the remote-control one-time-available mode is applicable or functions thereof to which the remote-control always-available mode is applicable in S2314. The processor 1150 may display, on the application, the type of the remote-control mode (e.g., the remote-control one-time-available mode or the remote-control always-available mode) of the home appliance selected by the user and various functions of the home appliance that can be remotely controlled.

These functions of the home appliance that can be remotely controlled may vary depending on the type and model of the home appliance.

Hereinafter, various embodiments of the remote-control one-time-available mode or the remote-control always-available mode according to the present disclosure will be described.

Referring to (a) of FIG. 24A, the processor 1150 may display a screen 2410 including various functions for setting the selected home appliance (e.g., the dishwasher 117) on the application.

For example, the screen 2410 may include information 2411 indicating that the remote-control mode of the selected home appliance (e.g., the dishwasher 117) has been set to the remote-control one-time-available mode.

Referring to (b) of FIG. 24A, the processor 1150 may display a screen 2415 including various functions for setting the selected home appliance (e.g., the dishwasher 117) on the application.

For example, the screen 2415 may include information 2416 indicating that the remote-control mode of the selected home appliance (e.g., the dishwasher 117) has been set to the remote-control always-available mode.

According to an embodiment, the processor 1150 may identify whether a function is selected in S2316. The processor 1150 may display a list of functions of the selected home appliance that can be remotely controlled on the application, and identify a function selected by the user from among the displayed function list.

According to an embodiment, the processor 1150 may display a guide message indicating whether to remotely control the selected function in S2318. The processor 1150 may display information about one-time remote-control of the function selected by the user on the application. Alternatively, the processor 1150 may display information about always remote-control of the function selected by the user on the application.

According to an embodiment, the processor 1150 may identify whether a remote-control command is input in S2320. The processor 1150 may identify, through the application, a command for remotely controlling the function selected by the user.

According to an embodiment, the processor 1150 may display guide information based on the selected function in S2322. The processor 1150 may display guide information on the remote-control one-time-available mode applied to the function selected by the user among various functions of the selected home appliance on the application. Alternatively, the processor 1150 may display, on the application, guidance information on the remote-control always-available mode applied to the function selected by the user among various functions of the selected home appliance.

Referring to (c) and (d) of FIG. 24B, the processor 1150 may display, on the application, a screen 2420 for remotely controlling a powered off state of the home appliance (e.g., the dishwasher 117) to be a powered-on state. The screen 2420 may include information 2421 indicating that the power of the home appliance (e.g., the dishwasher 117) is currently turned off and a power button 2422 for switching the power turned-off state of the home appliance (e.g., the dishwasher 117) to a power turned-on state.

For example, when the user presses the power button 2422, the processor 1150 may display a pop-up 2431 guiding the user to turn on the power of the home appliance on the screen 2430 of the application.

Referring to (a) to (c) of FIG. 25, the processor 1150 may display, on the application, a screen 2510 including a list 2514 of functions of the dish washer 117 to which the remote-control one-time-available mode (or the remote-control always-available mode) is applicable.

Upon detection that the door 330 of the dishwasher 117 is opened during the operation thereof, the processor 1150 may display a message 2511 about the opening of the door 330 and guide information 2513 indicating that the remote-control one-time-available mode is deactivated on the screen 2510.

On the other hand, when it is sensed that the door 330 of the dishwasher 117 is opened during the operation of the dishwasher 117 in the state in which the dishwasher 117 is set to the remote-control always-available mode, the processor 1150 may display a message 2511 regarding the opening of the door 330 and information indicating that the remote-control always-available mode is maintained on the screen 2510.

In addition, in response to that the user selects the power button 2512 to turn off the power of the dishwasher 117 on the screen 2510, the processor 1150 may display a pop-up 2521 guiding the user to turn off the power thereof on the screen 2520 of the application. For example, the pop-up 2521 may include a menu 2522 for canceling the turning off of the power of the dishwasher 117 and a menu 2523 for approving the turning off of the power of the dishwasher 117.

In response to that the user selects the menu 2523 indicating the approval of turning off the power of the dishwasher 117, the processor 1150 may check the current state of the dishwasher 117 and display a pop-up 2531 including guidance information corresponding thereto on the application screen 2530. For example, when the dishwasher 117 is in a state in which the residual water is not discharged, and when the power is turned off, the processor 1150 may display a pop-up 2531 including guide information indicating that a smell due to the residual water may be generated on the screen 2530 of the application.

Referring to (a) of FIG. 26A, in response to that the dishwasher 117 is operating in a strong steam course while the remote-control mode of the dishwasher 117 is turned off, the processor 1150 may display a screen 2610 indicating the current operation state of the dishwasher 117 on the application.

The screen 2610 may include guide information 2611 indicating that the remote-control mode of the dishwasher 117 is turned off and a list 2612 of functions of the dishwasher 117 which can be remotely controlled.

For example, the functions of the dishwasher 117 which can be remotely controlled include steam, intensive washing, high temperature sterilization, safe sterilization , hot air drying and reservation.

Referring to (b) of FIG. 26A and (c) of FIG. 26B, in response to that the opening of the door 330 is detected in a state in which the remote-control mode of the dishwasher 117 is turned on and the dishwasher 1117 is operating in the strong steam course, the processor 1150 may display a screen 2620 on the application.

The screen 2620 may include a guide message 2621 notifying that the door 330 is opened, a screen 2622 indicating a current operation state of the dishwasher 117, and information 2623 indicating that the washer 117 is currently operating in the strong steam course.

As the door 330 is opened, the processor 1150 may stop the current operation of the dishwasher 117 and include a start menu 2631 into the screen 2630.

Thereafter, in response to that a closing event of the door 330 is detected, the processor 1150 removes the guide message 2621 notifying that the door 330 is opened from the screen 2630.

In addition, the processor 1150 may display a screen 2640 including information 2641 indicating that the strong steam course of the dishwasher 117 has stopped as the door 330 is opened, and the strong steam is not resumed.

In addition, the processor 1150 may deactivate 2642 the strong steam course activated in the remote-control one-time-available mode.

Even when closing or opening of the door 330 is detected in a state in which the dishwasher 117 is set to the remote-control always-available mode, the processor 1150 may maintain the strong steam course in the active state.

In this state, the user may want to apply the remote-control one-time-available mode to the deactivated strong steam course again. In this case, the user may set the remote-control mode to the remote-control one-time-available mode in (a) in FIG. 24A.

On the other hand, when the dishwasher 117 has been set to the remote-control always-available mode, the user does not need to set the remote-control mode to the always-on use mode in (b) in FIG. 24A.

As described above, the portable terminal 130 according to the present disclosure may receive a command for remotely operating various operations of the home appliance in the remote-control one-time-available mode or the remote-control always-available mode through the application, and may display the screen including an operation state of the home appliance on the application based on the input command.

According to an embodiment, the processor 1150 may generate a remote-control request signal and transmit the generated remote-control request signal to the server in S2324. The processor 1150 may generate a signal requesting that the function of the home appliance selected by the user is subjected to the remote-control one-time-available mode or the remote-control always-available mode, and transmit the generated signal to the server 120 through the communicator 1140.

For example, as illustrated in FIG. 23 to (d) in FIG. 26B, the processor 1150 may generate a signal requesting the user to apply the function of the home appliance to the remote-control one-time-available mode or the remote-control always-available mode and transmit the generated signal to the server 120. Such a signal may include, for example, a product name, a serial number, a software version of the selected home appliance, the remote-control one-time-available mode (or the remote-control always-available mode) thereof, and an Internet address of the server 120.

In FIG. 23 to (d) in FIG. 26B, various processes of setting a remote-control mode of a home appliance (e.g., the dishwasher 117) to a remote-control one-time-available mode in order to operate the home appliance in the remote-control one-time-available mode as shown in (a) of FIG. 24A and operating the home appliance (e.g., the dishwasher 117) in the remote-control one-time-available mode or the remote-control always-available mode through the portable terminal 130 have been described.

As described above, the portable terminal 130 according to the present disclosure may set the remote-control mode of the home appliance (e.g., the dishwasher 117) to not only the remote-control one-time-available mode but also the remote-control always-available mode, and may control the home appliance (e.g., the dishwasher 117) in the remote-control always-available mode through the portable terminal 130.

FIG. 27 is a flowchart illustrating an operation process of a home appliance according to another embodiment of the disclosure.

Hereinafter, an operation process of a home appliance according to another embodiment of the present disclosure will be described in detail with reference to FIG. 27.

According to an embodiment, the processor 790 may identify whether an input for remotely setting the home appliance (e.g., the dishwasher 117) is detected in S2710. The processor 790 may obtain a command for remotely controlling the dishwasher 117 through the first manipulation panel 320 and/or the second manipulation panel 410 of the display 780. Alternatively, the processor 790 may receive a control signal through the communicator 710.

The processor 790 may set the remote-control mode of the home appliance (e.g., the dish washer 117) to one of the remote-control unavailable mode, the remote-control multiple-times (e.g., three times, 21 times, etc.) available mode, the remote-control predetermined time duration (e.g., three hours, 24 hours, etc.) available mode, or the remote-control always-available mode, based on the command received through the first manipulation panel 320 and/or the second manipulation panel 410 or the control signal received through the communicator 710.

In addition, the type of the event under which each of the various types of the remote-control modes is deactivated may vary based on the type of the remote-control mode.

According to an embodiment, the processor 790 may recognize an event in S2712. The processor 790 may recognize an event occurring in the home appliance (e.g., the dishwasher 117).

According to an embodiment, the processor 790 may identify whether the recognized event corresponds to the current remote-control mode in S2714. The processor 790 may identify whether the recognized event is an event for deactivating the remote-control mode currently set in the home appliance (e.g., the dishwasher 117).

According to an embodiment, the processor 790 may deactivate the remote-control mode in S2716. When the event recognized in the process S2712 is determined as an event for deactivating the remote-control mode currently set in the home appliance (e.g., the dishwasher 117), the processor 790 may deactivate the remote-control mode set in the home appliance (e.g., the dishwasher 117).

In response to that the event recognized in the process S2712 is determined as not being the event for deactivating the remote-control mode currently set in the home appliance (e.g., the dishwasher 117), the processor 790 does not deactivate the remote-control mode set in the home appliance (e.g., the dishwasher 117).

The steps in each flowchart as described above may be executed regardless of the illustrated order, or may be performed simultaneously. In addition, at least one component as disclosed in the present disclosure and at least one operation performed by the at least one component may be implemented in hardware and/or software.

Although the present disclosure has been described above with reference to the drawings illustrated with respect to the present disclosure, the present disclosure is not limited to the embodiments and drawings disclosed in the present disclosure. It is obvious that various modifications may be made thereto by a person skilled in the art within the scope of the technical idea of the present disclosure. In addition, even though the effects according to the configuration of the present disclosure is not explicitly described while describing the embodiment of the present disclosure, it is obvious that the predictable effect therefrom should also be recognized.

## Claims

1. A home appliance comprising:
an manipulation panel configured to display an operation state of the home appliance; and
a processor configured to control an operation of the home appliance,
wherein the processor is configured to:
if an input for remotely controlling the home appliance is sensed through the manipulation panel, set the home appliance to a remote-control mode;
if an event for deactivating the remote-control mode is detected, identify whether the input is a remote-control one-time-available mode or the remote-control always-available mode related to the home appliance; and
control the remote-control mode of the home appliance to an active state or an inactive state based on the identification.

2. The home appliance of claim 1, wherein if the input indicates the remote-control one-time-available mode related to the home appliance, the processor is configured to switch the set remote-control mode to the inactive state based on detection of a first event.

3. The home appliance of claim 2, wherein the first event includes:
switching of the remote-control one-time-available mode to a remote-control unavailable mode or the remote-control always-available mode through the manipulation panel;
sensing of opening of a door of the home appliance;
sensing of a key input;
completion of a cycle of the home appliance;
occurrence of an error in the home appliance; and/or
an input related to power turning-on/off of the home appliance.

4. The home appliance of claim 3, wherein the manipulation panel is disposed on a front surface of the door of the home appliance.

5. The home appliance of claim 4, wherein the processor is configured to switch the manipulation panel to an active state or an inactive state based on opening or closing of the door.

6. The home appliance of claim 1, wherein if the input indicates the remote-control always-available mode related to the home appliance, the processor is configured to maintain the set remote-control mode in the active state or switch the set remote-control mode to the inactive state, based on detection of a second event.

7. The home appliance of claim 6, wherein the second event includes:
switching of the remote-control always-available mode to a remote-control unavailable mode or the remote-control one-time-available mode through the manipulation panel; and/or
occurrence of an error in the home appliance.

8. The home appliance of claim 1, wherein if an input for not remotely controlling the home appliance is sensed through the manipulation panel, the processor is configured to switch the remote-control mode of the home appliance to the inactive state.

9. The home appliance of claim 1, wherein the manipulation panel includes at least one light-emitting element, and
wherein the processor is configured to control the light-emitting element to display information on the active state and the inactive state of the remote-control mode of the home appliance in different manners.

10. The home appliance of claim 9, wherein the processor is configured to control the light-emitting element to display information on the remote-control unavailable mode, the remote-control one-time-available mode, and the remote-control always-available mode of the home appliance in different manners.

11. The home appliance of claim 1, further comprising a communicator,
wherein the processor is configured to transmit information on remote-control of the home appliance to a server through the communicator.

12. The home appliance of claim 1, wherein the home appliance includes a dishwasher, a refrigerator, an air purifier, a clothing care apparatus, an induction heater, a washing machine, an oven, or a robot cleaner.

13. A home appliance comprising:
a communicator configured to transmit and receive a signal related to an operation of the home appliance; and
a processor configured to control an operation of the home appliance,
wherein the processor is configured to:
a signal for remotely controlling the home appliance is received through the communicator, set the home appliance to a remote-control mode, based on the received signal;
if an event for deactivating the remote-control mode is detected, identify whether the signal is a remote-control one-time-available mode or a remote-control always-available mode related to the home appliance; and
control the remote-control mode of the home appliance to an active state or an inactive state, based on the identification.

14. The home appliance of claim 13, wherein if the home appliance is set to the remote-control mode based on the received signal, the processor is configured to transmit a signal indicating that the home appliance has been set to the remote-control mode to a server through the communicator.

15. A system for remotely controlling a home appliance, the system comprising:
a portable terminal configured to transmit a signal for remotely controlling at least one home appliance to a server, in response to that an input for remotely controlling the at least one home appliance is detected through an application; and
the home appliance configured to:
set the home appliance to a remote-control mode based on the signal received from the server;
if an event for deactivating the remote-control mode is detected, identify whether the signal is a remote-control one-time-available mode or a remote-control always-available mode related to the home appliance; and
control the remote-control mode to an active state or an inactive state based on the identification.
